(19) Europäisches Patentamt / European Patent Office / Office européen des brevets

(11) **EP 3 242 515 B1**

(12) **EUROPEAN PATENT SPECIFICATION**

(45) Date of publication and mention
of the grant of the patent:
**24.04.2019 Bulletin 2019/17**

(51) Int Cl.:
*H04L 5/14* (2006.01)     *H04L 5/00* (2006.01)
*H04W 72/04* (2009.01)

(21) Application number: **15874929.1**

(22) Date of filing: **16.10.2015**

(86) International application number:
**PCT/CN2015/092085**

(87) International publication number:
**WO 2016/107244 (07.07.2016 Gazette 2016/27)**

(54) **RESOURCE POOL CONFIGURATION METHOD AND DEVICE, AND COMPUTER STORAGE MEDIUM**

VERFAHREN UND VORRICHTUNG ZUR RESSOURCENPOOLKONFIGURATION SOWIE COMPUTERSPEICHERMEDIUM

PROCÉDÉ ET DISPOSITIF DE CONFIGURATION D'ENSEMBLE DE RESSOURCES, ET SUPPORT D'INFORMATIONS INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.12.2014 CN 201410851015**

(43) Date of publication of application:
**08.11.2017 Bulletin 2017/45**

(73) Proprietor: **ZTE Corporation**
**Shenzhen City, Guangdong Province 518057 (CN)**

(72) Inventors:
• **YANG, Jin**
**Shenzhen**
**Guangdong 518057 (CN)**
• **WU, Shuanshuan**
**Shenzhen**
**Guangdong 518057 (CN)**
• **DAI, Bo**
**Shenzhen**
**Guangdong 518057 (CN)**

(74) Representative: **AWA Sweden AB**
**Junkersgatan 1**
**582 35 Linköping (SE)**

(56) References cited:
**WO-A1-2014/178671**    **CN-A- 103 841 649**
**CN-A- 104 202 821**

• **"UE procedures related to Sidelink", 3GPP DRAFT; SUBC_14 - D2D ---, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 3 December 2014 (2014-12-03), XP050919795, Retrieved from the Internet: URL:http://www.3gpp.org/ftp/tsg_ran/WG1_RL 1/TSGR1_79/Docs/ [retrieved on 2014-12-03]**
• **ZTE: "Discussion on Content and Usage of PD2DSCH", 3GPP DRAFT; R1-143815 PD2DSCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Ljubljana, Slovenia; 20141006 - 20141010 5 October 2014 (2014-10-05), XP050875134, Retrieved from the Internet: URL:http://www.3gpp.org/ftp/Meetings_3GPP_ SYNC/RAN1/Docs/ [retrieved on 2014-10-05]**

    **(Cont. next page)**

- RAPPORTEUR (ERICSSON): "[87bis#16][LTE/ProSe] MAC running CR - Email discussion re", 3GPP DRAFT; R2-145068 - E-MAIL DISCUSSION REPORT 87BIS#16, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. San Francisco, USA; 20141117 - 20141121 17 November 2014 (2014-11-17), XP050877187, Retrieved from the Internet: URL:http://www.3gpp.org/ftp/Meetings_3GPP_ SYNC/RAN2/Docs/ [retrieved on 2014-11-17]

- RAPPORTEUR (ERICSSON): "[87bis#16][LTE/ProSe] MAC running CR - Email discussion re", 3GPP DRAFT; R2-145068 - E-MAIL DISCUSSION REPORT 87BIS#16, 3RD GENERATION PARTNERSHIP PROJECT (3GPP),

**Description**

Technical Field

The present invention relates to mobile communication technologies, and in particularly, to a resource pool configuration method and device in device-to-device (D2D) communication, and computer storage medium.

Background

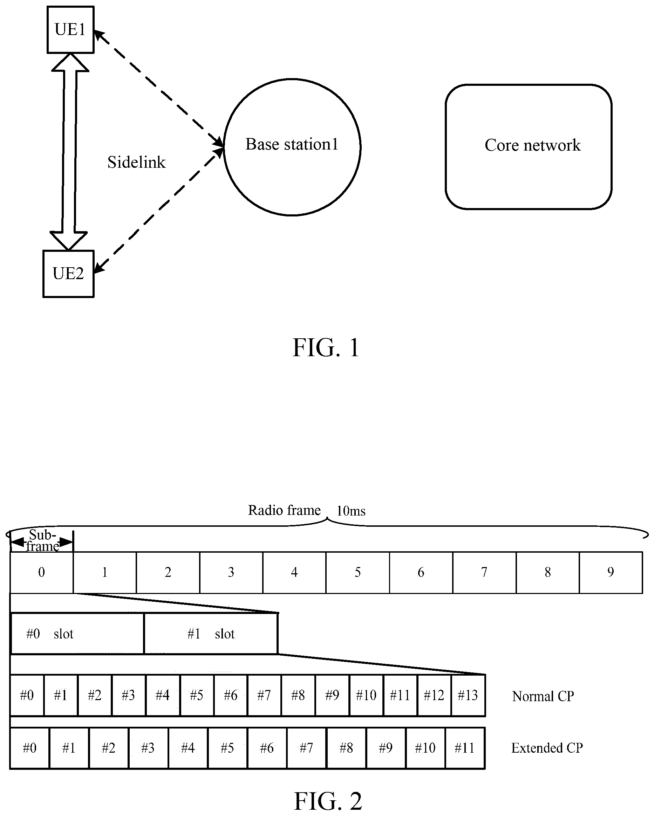

In a device-to-device (D2D) communication system, when there are services to be transmitted between user equipment (UEs), service data between UEs is not forwarded by a base station, but is directly transmitted to a target UE by a data source UE through an air interface. As shown in FIG. 1, a radio link between D2D UEs is called a physical sidelink. A D2D communication mode has features which are obviously different from features of a communication mode of the traditional cellular system. For near field communication users who can use the D2D communication mode, D2D transmission not only saves radio spectrum resources, but also reduces the data transmission pressure of a core network, thereby reducing system resource occupation, increasing the spectrum efficiency of the cellular communication system, reducing transmitting power consumption of a terminal and saving the network operating cost to a very great extent.

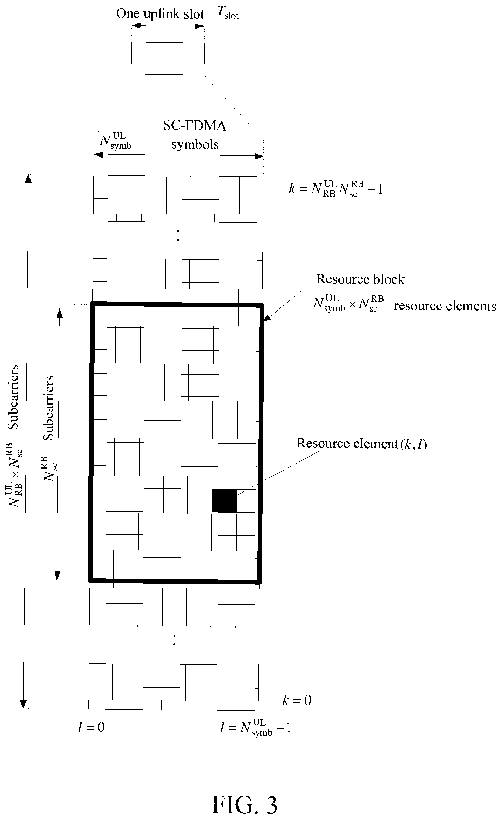

In the traditional cellular communication system, radio resources of the UE are uniformly controlled and scheduled by an evolved NodeB (eNB). The eNB indicates downlink or uplink resources configured for the UE, and the UE receives data signals transmitted by the eNB on the corresponding downlink resources or transmits signals to the eNB on the uplink resources according to configuration indication of the eNB. In a Long Term Evolution (LTE) system, radio resources are divided in a time domain with a radio frame as a unit, each radio frame being 10ms and containing 10 subframes. Each subframe is 1ms and divided into 2 slots of 0.5ms. As shown in FIG. 2, in a frequency domain, resources are divided with a subcarrier as a unit, each subcarrier containing 15kHz or 7.5kHz resources. According to the time domain and frequency domain resource units, the minimum unit of time and frequency resources is a resource block (RB) when the eNB schedules the resources for the UE, the RB is defined as 1 slot in the time domain and $N_{\mathrm{sc}}^{\mathrm{RB}}$ $N_{sc}^{RB}$ continuous subcarriers in the frequency domain, $N_{\mathrm{sc}}^{\mathrm{RB}} N_{sc}^{RB} N_{sc}^{RB} = 12.24$. As illustrated in FIG. 3, the eNB can dynamically schedule and configure the required resources flexibly according to requirements of the UE.

In the D2D communication system, data transmission is directly carried out between UEs. A transmitter UE can obtain physical sidelink control channel (PSCCH) and physical sidelink shared channel (PSSCH) resources of the D2D communication according to the scheduling and configuration on the network side, but also can select resources competitively in given PSCCH and PSSCH resource pools for D2D communication control and transmission of data information.

However, the following problem exists in the D2D communication process described above: the D2D UE can only perform unidirectional broadcast/multicast communication based on the PSCCH and PSSCH resources, and the transmitter UE blindly transmits D2D data, thus reception result of the data cannot be known, and the channel resource utilization is low.

The 3GPP document "UE procedures related to Sidelink" SUBC_14-D2D (03.12.2014) discloses that a UE can be configured by higher layers with one or more PSSCH resource configuration.

The 3GPP document "Discussion on Content and Usage of PD2DSCH" R1-143815 discloses the channel structure of PD2DSCH and some design aspects of PD2DSCH.

The T3GPP document R2-145068 "[87bis#16][LTE/ProSe] MAC running CR-Email discussion report" discloses organizing the e-mail discussion on the running CR for MAC introducing ProSe.

The document WO 2014/178671 discloses configuring one or multiple pools of D2D communication resources by an eNodeB.

Summary

Embodiments of the present invention provide a resource pool configuration method and device and a computer storage medium so as to improve the physical sidelink channel resource utilization.

The above problem is solved by a method according to claim 1 and a device according to claim 9. Further improvements and embodiments are provided in the dependent claims. References to embodiments which do not fall under the scope of the claims are to be understood as examples useful for understanding the invention.

The scheme of the embodiments of the present invention is implemented as follows.

In the first aspect, an embodiment of the present invention provides a resource pool configuration method including:

configuring a physical sidelink second control channel (PSSCCH) resource pool;
herein resources in the PSSCCH resource pool are used by user equipment (UE) which performs device-to-device (D2D) communication to carry and send feedback control information of physical sidelink.

In the second aspect, an embodiment of the present invention provides a resource pool configuration device including:

a configuration unit configured to configure a physical sidelink second control channel (PSSCCH) resource pool; and
a determination unit configured to determine resources in the PSSCCH resource pool, herein the resources in the PSSCCH resource pool are used to carry feedback control information of physical sidelink sent by user equipment (UE) which performs device-to-device (D2D) communication.

In the third aspect, an embodiment of the present invention provides a computer storage medium having executable instructions stored therein for performing the resource pool configuration method.

In the embodiments of the present invention, by configuring the physical sidelink second control channel resource pool for carrying and sending information, such as a channel quality report, channel measurement report, feedback information of D2D communication data reception, and the like, D2D transmitter UE can obtain the relative information of resources used for data transmission, and achieve the effect of reducing interference, and improving the physical sidelink channel resource utilization and transmission rate of the D2D communication data.

Brief Description of the Drawings

FIG. 1 is a structural diagram of D2D communication.
FIG. 2 is a structural diagram of a radio frame in an LTE system.
FIG. 3 is a structural diagram of a resource block (RB) of an LTE system.
FIG. 4 is an implementation schematic diagram of a resource pool configuration method according to an embodiment of the present invention.
FIG. 5 is a diagram of a flow of carrying feedback control information of D2D communication using a PSSCCH resource pool according to an embodiment of the present invention.
FIG. 6 is a first schematic diagram of a configuration of a PSSCCH resource pool according to an embodiment of the present invention.
FIG. 7 is a schematic diagram of bitmap cyclic mapping of PSSCCH subframes in a PSSCCH resource pool according to an embodiment of the present invention.
FIG. 8 is a first schematic diagram of a configuration of PSSCCH subframes in a PSSCCH resource pool according to an embodiment of the present invention.
FIG. 9 is a second schematic diagram of a configuration of PSSCCH subframes in a PSSCCH resource pool according to an embodiment of the present invention.
FIG. 10 is a third schematic diagram of a configuration of PSSCCH subframes in a PSSCCH resource pool according to an embodiment of the present invention.
FIG. 11 is a first schematic diagram of a configuration of frequency domain RBs in a PSSCCH resource pool according to an embodiment of the present invention.
FIG. 12 is a second schematic diagram of a configuration of frequency domain RBs in a PSSCCH resource pool according to an embodiment of the present invention.
FIG. 13 is a third schematic diagram of a configuration of frequency domain RBs in a PSSCCH resource pool according to an embodiment of the present invention.
FIG. 14 is a fourth schematic diagram of a configuration of frequency domain RBs in a PSSCCH resource pool according to an embodiment of the present invention.
FIG. 15 is a second schematic diagram of a configuration of a PSSCCH resource pool according to an embodiment of the present invention.
FIG. 16 is a fourth schematic diagram of a configuration of PSSCCH subframes in a PSSCCH resource pool according to an embodiment of the present invention.
FIG. 17 is a fifth schematic diagram of a configuration of PSSCCH subframes in a PSSCCH resource pool according to an embodiment of the present invention.
FIG. 18 is a structural diagram of a resource pool configuration device according to an embodiment of the present invention.

Detailed Description

In order to make the object, scheme and advantage of the present invention more clear, the embodiments of the present invention will be further described in detail in conjunction with the accompanying drawings. It should be noted that embodiments in the present invention and features in the embodiments can be arbitrarily combined with each other without conflict.

In a D2D communication system, a D2D transmitter UE having D2D data to be sent transmits D2D scheduling control information on a physical sidelink control channel (PSCCH) to instruct D2D data transmission on the corresponding physical sidelink shared channel (PSSCH). When a broadcast communication mode is used for D2D, the D2D transmitter UE may not obtain feedback information indicating whether data reception is correct from a receiver UE after the transmission of the scheduling control information and the corresponding data is completed. In addition, the receiver UE can not feed back Sidelink measurement and status information to the transmitter UE.

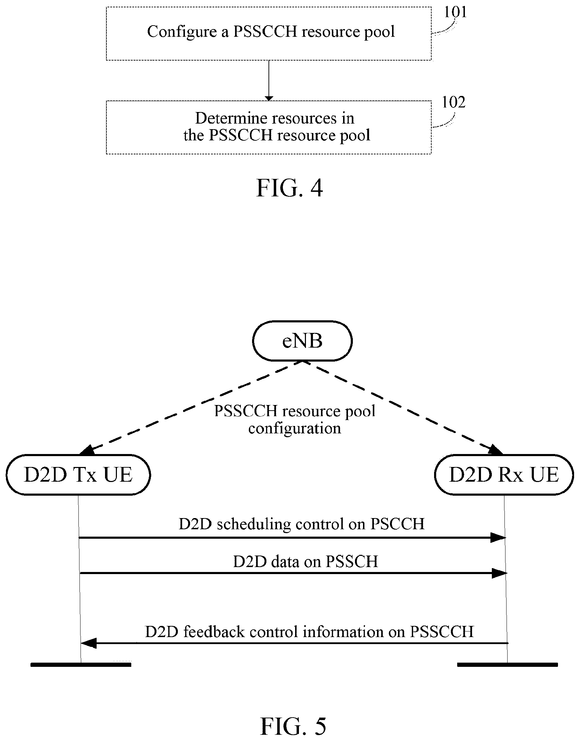

As shown in FIG. 4, a resource pool configuration method according to an embodiment of the present invention includes steps 101 and 102. In step 101, a physical sidelink second control channel (PSSCCH) resource pool is configured. In step 102, resources in the PSSCCH resource pool are determined, the resources in the PSSCCH resource pool are used by user equipment (UE) which performs device-to-device (D2D) communication to carry and send feedback control information of physical sidelink, such that the receiver UE carries and sends the following information: sidelink channel data acknowledgment/non-acknowledgment information (A/N), sidelink channel state information (CSI), sidelink channel quality indicator (CQI), sidelink channel rank indication (RI), Sidelink channel precoding matrix indicator (PMI), etc. The D2D receiver UE may provide reference information used by data transmission resources for the D2D transmitter UE by the above feedback control information, to achieve effects of reducing interference, and improving the physical sidelink channel resource utilization and transmission rate of the D2D communication data.

The PSSCCH resource pool is periodic, and one or more subframes are contained within a period. Each PSSCCH subframe contains one or more RBs, and configuring the PSSCCH resource pool includes determining configurations for the period, time domain resources and frequency domain resources.

Configuration manners of the period, time domain resource (i.e., subframe), frequency domain resource (RB) of the PSSCCH resource pool include:

  system definition;
  system preconfiguration;
  high layer signaling configuration indication;
  determination according to a PSCCH resource pool; and
  determination according to a PSSCH resource pool.

As one embodiment, the period of the PSSCCH resource pool is T times the period of the PSCCH or PSSCH resource pool, where T is a positive integer, the value of T is a constant value or the value of T is configured by high layer signaling.

As one embodiment, configuring the physical sidelink second control channel (PSSCCH) resource pool includes defining that the one or more subframes are contained in the PSSCCH resource pool within the period when the time domain resources contained in the PSSCCH resource pool are defined by a system.

As one embodiment, configuring the physical sidelink second control channel (PSSCCH) resource pool includes defining that the one or more resource blocks (RBs) are contained in the PSSCCH resource pool when the frequency domain resources contained in the PSSCCH resource pool are defined by a system.

As one embodiment, configuring the PSSCCH resource pool includes determining a preconfiguration of the PSSCCH resource pool according to a bandwidth of the system and/or a duplex mode of the system when the PSSCCH resource pool is preconfigured by the system, the preconfiguration of the PSSCCH resource pool is fixed.

As one embodiment, the preconfiguration of the PSSCCH resource pool includes at least one of the following: the period of the PSSCCH resource pool; the time domain resources contained in the PSSCCH resource pool; and the frequency domain resources contained in the PSSCCH resource pool. Herein the time domain resources of the PSSCCH resource pool includes the one or more subframes in the period, and the frequency domain resources of the PSSCCH resource pool include the one or more RBs within the bandwidth of the system.

As one embodiment, configuring the PSSCCH resource pool includes: when the time domain resources contained in the PSSCCH resource pool are indicated by system preconfiguration and/or high layer signaling, indicating the one or more subframes contained in the PSSCCH resource pool in the period by N-bit indication information in a bitmap manner. Herein, when a corresponding bit in an N-bit bitmap is indicated to be 1, it is indicated that a corresponding subframe is the resource in the PSSCCH resource pool, and when a corresponding bit in the N-bit bitmap is indicated to be 0, it is indicated that a corresponding subframe is not the resource in the PSSCCH resource pool. Or when a corresponding bit in the N-bit bitmap is indicated to be 0, it is indicated that a corresponding subframe is the resource in the PSSCCH resource pool, and when a corresponding bit in the N-bit bitmap is indicated to be 1, it is indicated that a corresponding subframe is not the resource in the PSSCCH resource pool.

As one embodiment, the N-bit bitmap is mapped once within the period, or repeatedly cyclic mapped within the period.

As one embodiment, configuring the PSSCCH resource pool includes: when the time domain resources contained in the PSSCCH resource pool are indicated by the system preconfiguration and/or high layer signaling, indicating a start position of the N-bit bitmap mapping relative to a boundary of the period by an offset. Herein the offset indication uses a subframe as a unit.

As one embodiment, configuring the PSSCCH resource pool includes: when the frequency domain resources contained in the PSSCCH resource pool are indicated by the system preconfiguration and/or high layer signaling, indicating the one or more RB resources contained in the PSSCCH resource pool by the following parameters: the number of physical resource blocks (PRBs), a PRB start position, and a PRB end position.

As one embodiment, when the PSSCCH resource pool is indicated by the high layer signaling, the high layer signaling is a system information block (SIB) or a radio resource control (RRC) message.

As one embodiment, when the high layer signaling is an SIB, the configuration of the PSSCCH resource pool is valid for all UEs which perform D2D communication in a cell or is valid for a UE within a determined D2D group.

As one embodiment, when the high layer signaling is an RRC message indication, the configuration indication of the PSSCCH resource pool is contained in a device-to-device communication configuration (ProseCommConfig) information unit.

As one embodiment, configuring the PSSCCH resource pool includes: when the time domain resources contained in the PSSCCH resource pool are determined based on the PSCCH resource pool or the PSSCH resource pool, determining the subframes contained in the PSSCCH resource pool within the period according to the subframes contained in the PSCCH resource pool or the PSSCH resource pool.

As one embodiment, there is a one-to-one correspondence between the subframes contained in the PSSCCH resource pool and the subframes contained in the PSCCH resource pool or the PSSCH resource pool within the period, and a subframe interval between the PSSCCH subframe and the corresponding PSCCH subframe or the PSSCH subframe is $k$, where $k$ is an integer, and the value of $k$ is a constant value or the value of $k$ is configured by the high layer signaling.

As one embodiment, the PSSCCH resource pool contains the one or more PSSCCH subframes within the period, and among the multiple PSSCCH subframes, a subframe interval between a first PSSCCH subframe and a first or last PSCCH subframe in the PSCCH resource pool within the period is $k$; or a subframe interval between the first PSSCCH subframe in the PSSCCH resource pool and a first or last PSSCH subframe in the PSSCH resource pool within the period is $k$, where $k$ is an integer, and $k$ is a constant value or is configured by the high layer signaling.

As one embodiment, when the PSSCCH resource pool contains multiple subframes within the period, the multiple PSSCCH subframes are consecutive, or the multiple PSSCCH subframes are distributed at a fixed subframe interval.

As one embodiment, Npsscch, the number of the subframes contained in the PSSCCH resource pool is determined according to Npscch, the number of the subframes in the PSCCH resource pool, or according to Npssch, the number of the subframes in the PSSCH resource pool. Npsscch is obtained by rounding up Npscch divided by $n$, or Npsscch is obtained by rounding up Npssch divided by $n$, where $n$ is a positive integer, the value of $n$ is a constant value or the value of n is configured by the high layer signaling.

As one embodiment, every $n$ PSCCH subframes or every $n$ PSSCH subframes correspond to one PSSCCH subframe in order within the period. Herein the PSSCCH subframe satisfies one of the following conditions: the subframe interval between the PSSCCH subframe and the first subframe of the corresponding $n$ PSCCH subframes or PSSCH subframes is k; the subframe interval between the PSSCCH subframe and the last subframe of the corresponding $n$ PSCCH subframes or PSSCH subframes is $k$, where $k$ is an integer, and the value of $k$ is a constant value or the value of $k$ is configured by the high layer signaling.

As one embodiment, configuring the PSSCCH resource pool includes: when the frequency domain resources contained in the PSSCCH resource pool are determined according to the PSCCH resource pool or the PSSCH resource pool, determining the RBs contained in the PSSCCH resource pool according to the RBs contained in the PSCCH resource pool or the PSSCH resource pool.

As one embodiment, the PSSCCH resource pool contains the same RBs as in the PSCCH resource pool.

As one embodiment, Mpsscch, the number of the RBs contained in the PSSCCH resource pool is determined based on Mpscch, the number of the RBs contained in the PSCCH resource pool, or based on Mpssch, the number of the RBs contained in the PSSCH resource pool. Mpsscch is obtained by rounding up Mpscch divided by $m$, or Mpsscch is obtained by rounding up Mpssch divided by $m$, where $m$ is a positive integer, and the value of $m$ is a constant value or the value of m is configured by the high layer signaling.

As one embodiment, an RB contained in the PSSCCH resource pool is denoted by an RB index $i$, where $i$

satisfies one of the following conditions:

$$i = [RBmin, RBmin + 1, RBmin + 2, ..., RBmin + Mpsscch-1];$$

$$i = [RBmin-1, RBmin-2, RBmin-3, ..., RBmin-Mpsscch];$$

$$i = [RBmax, RBmax-1, RBmax-2, ..., RBmax-Mpsscch + 1]$$

$$i = [RBmax + 1, RBmax + 2, RBmax + 3, ..., RBmax + Mpsscch];$$

$$i = [RBmin, RBmin + 1, RBmin + 2, ..., RBmin + \lceil Mpsscch/2 \rceil -1], [RBmax, RBmax-1,$$

$$RBmax-2, ..., RBmax- \lceil Mpsscch/2 \rceil +1];$$

and

$$i = [RBmin-1, RBmin-2, RBmin-3, ..., RBmin- \lceil Mpsscch/2 \rceil ], [RBmax + 1, RBmax + 2,$$

$$RBmax + 3, ..., RBmax + \lceil Mpsscch/2 \rceil ].$$

Herein RBmin is the minimum index of the RBs contained in the PSCCH resource pool or the PSSCH resource pool, and RBmax is the maximum index of the RBs contained in the PSCCH resource pool or the PSSCH resource pool.

As one embodiment, the number of the PSSCCH resource pools satisfies one of the following conditions: the number of the PSSCCH resource pools is the same as the number of PSCCH resource pools and there is a one-to-one correspondence between the PSSCCH resource pools and the PSCCH resource pools; and the number of the PSSCCH resource pools is the same as the number of the PSSCH resource pools, and there is a one-to-one correspondence between the PSSCCH resource pools and the PSSCH resource pools.

The method of determining the PSSCCH resource pool described above can be used in any combination without conflict, and will be further explained by way of specific examples.

Based on the configuration of the PSSCCH resource pool, the effect of feeding back D2D control information effectively can be achieved. An example is shown in FIG. 5, an eNB indicates the PSSCCH resource pool through the high layer signaling. All D2D UEs in a cell can obtain unified configuration information of the PSSCCH resource pool. After a D2D transmitter UE (Tx UE) transmits D2D scheduling control information on the PSCCH resources, a D2D receiver UE (Rx UE) receives D2D data on the corresponding PSSCH resources according to the control information. Further, the Rx UE may report feedback control information on the PSSCCH resources to the Tx UE, such as feedback information of D2D data receiving and/or a sidelink channel measurement report.

Example 1: system definition

In the D2D communication system, the resources contained in the PSSCCH resource pool in the system can be defined corresponding to different system bandwidth (or D2D communication available bandwidth) and system duplex modes. One example is as shown in table 1, the fixed configuration of the PSSCCH resource pool is defined in different system bandwidth and duplex modes. A configuration definition for each PSSCCH resource pool contains the period of the PSSCCH resource pool, the subframes contained within the period, and the RB resources contained in each PSSCCH subframe. For example, the PSSCCH configuration # FDD-5 is defined as follows: the period of the PSSCCH resource pool is 40ms, four PSSCCH subframes, subframes #9, 19, 29 and 39, respectively, are contained in the period, frequency domain RBs contained in the PSSCCH resource pool are RB indexes #0, 1, 2, 3, 4 and RB indexes #$RB_{UL}$-5, $RB_{UL}$-4, $RB_{UL}$-3, $RB_{UL}$-2 and $RB_{UL}$-1, $RB_{UL}$ represents the number of frequency RBs in the system, other configurations of the PSSCCH resource pool, such as #FDD-10, #FDD15, #TDD 0-5, etc., can be similarly defined.

| System bandwidth Duplex mode | 5M Hz | 10M Hz | 15M Hz | 20M Hz |
|---|---|---|---|---|
| FDD | #FDD-5 | #FDD-10 | #FDD-15 | #FDD-20 |
| TDD UL/DL config #0 | #TDD 0-5 | #TDD 0-10 | #TDD 0-15 | #TDD 0-20 |
| TDD UL/DL config #1 | #TDD 1-5 | #TDD 1-10 | #TDD 1-15 | #TDD 1-20 |
| TDD UL/DL config #2 | #TDD 2-5 | #TDD 2-10 | #TDD 2-15 | #TDD 2-20 |
| TDD UL/DL config #3 | #TDD 3-5 | #TDD 3-10 | #TDD 3-15 | #TDD 3-20 |
| TDD UL/DL config #4 | #TDD 4-5 | #TDD 4-10 | #TDD 4-15 | #TDD 4-20 |
| TDD UL/DL config #5 | #TDD 5-5 | #TDD 5-10 | #TDD 5-15 | #TDD 5-20 |
| TDD UL/DL config #6 | #TDD 6-5 | #TDD 6-10 | #TDD 6-15 | #TDD 6-20 |

Table 1

When the system defines the specific configuration of the fixed PSSCCH resource pool in different system bandwidth and duplex modes, the D2D UE in the system can determine the corresponding configuration of the PSSCCH resource pool according to the system bandwidth and duplex mode, and no signaling is needed to indicate the PSSCCH resource pool, such that indication signaling overhead can be decreased, and the configurations of the PSSCCH resource pool can be unified.

Example 2: System preconfiguration

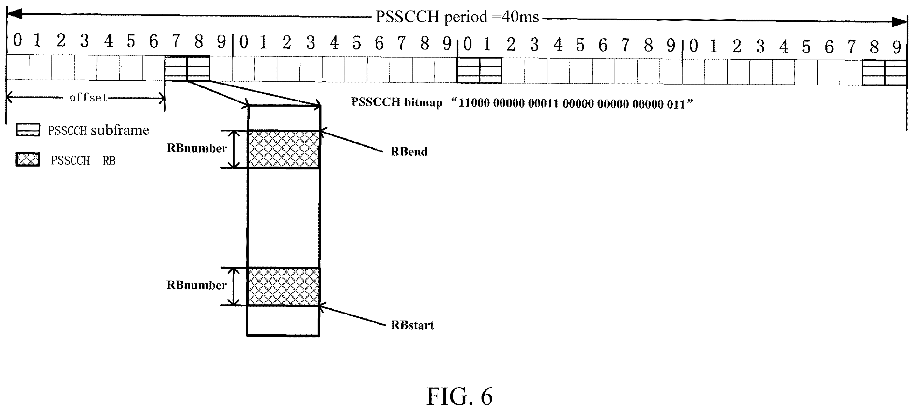

In the D2D communication system, the PSSCCH resource pool is preconfigured by the system for sending to whole network through network side equipment, or preconfigured according to requirements of operators in network side and terminal equipment. When the system uses the preconfigured PSSCCH resource pool, the PSSCCH resource pool can be set by corresponding parameters, specifically including: period, PSSCCH subframe bitmap indication, offset indication, RB number indication (RB-number), RB start position indication (RB-start) and RB end position indication (RB-end). The effect of indicating the PSSCCH resource pool by the above parameters is as shown in FIG. 6, where offset indicates an offset start position of the PSSCCH subframe bitmap relative to the period boundary, and the bitmap is mapped starting from a subframe corresponding to the offset indication. When the corresponding bit is indicated as "1", the corresponding subframe is the PSSCCH subframe, and when the corresponding bit is indicated as "0", the corresponding subframe is not the PSSCCH subframe. RB-number consecutive RBs starting from RB index = RB-start and RB-number consecutive RBs inward from RB index = RB-end in the frequency domain are resources contained in the PSSCCH resource pool in the frequency domain.

The PSSCCH resource pool is preconfigured by the system such that the resources in the corresponding PSSCCH resource pool can be configured effectively according to network requirements, to achieve the effect of making full use of system resources, coordinating interference and improving the resource utilization.

Example 3: high layer signaling indication, bitmap cyclical repetition

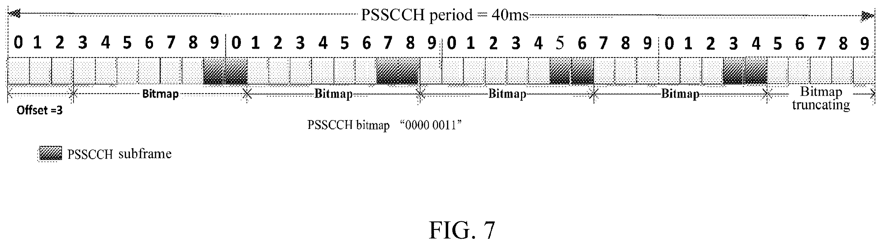

In the D2D communication system, the configured PSSCCH resource pool is indicated by the system through the high layer signaling, such as system broadcast information SIB (system information block) signaling. The configuration of the PSSCCH resource pool indicated by SIB is valid for all D2D UEs in the cell, or a common PSSCCH resource pool can be set for D2D UEs in different groups. Similar to the configuration parameters in Example 2, when the system indicates the PSSCCH resource pool via the SIB signaling, the PSSCCH resource pool can be indicated by the period, PSSCCH subframe bitmap indication, offset indication, RB number indication (RB-number), RB start position indication (RB-start) and RB end position indication (RB-end). The PSSCCH subframe bitmap can be mapped repeatedly within the period until the end of the period. In addition, when the last mapping of the bitmap within the period is not suit to the number of remaining subframes within the period, the bitmap mapping can be truncated according to the actual available subframes, as shown in FIG. 7.

The configuration of the PSSCCH resource pool is indicated by the high layer signaling such that the resources in the corresponding PSSCCH resource pool can be configured according to the network requirements, and there is certain flexibility. The configuration of the PSSCCH resource pool can be adjusted within a certain time range, to achieve the effect of making full use of system resources, coordinating interference, and improving the resource utilization.

Example 4: the PSSCCH subframes are determined according to the PSCCH resource pool.

In the D2D communication system, the subframes contained in the PSSCCH resource pool are determined according to the PSCCH subframes contained in the PSCCH resource pool.

The period of the PSSCCH resource pool is the same as the period of the PSCCH resource pool, and the PSSCCH subframes are determined according to the PSCCH subframe indexes, that is, there is a one-to-one correspondence between the PSSCCH subframes and the PSCCH subframes, and the subframe interval between the PSSCCH subframe and the corresponding PSCCH subframe is k, where $k$ is an integer, and can be set to a constant value by the system, or the value of $k$ is indicated by the high layer signaling, for example, by SIB signaling.

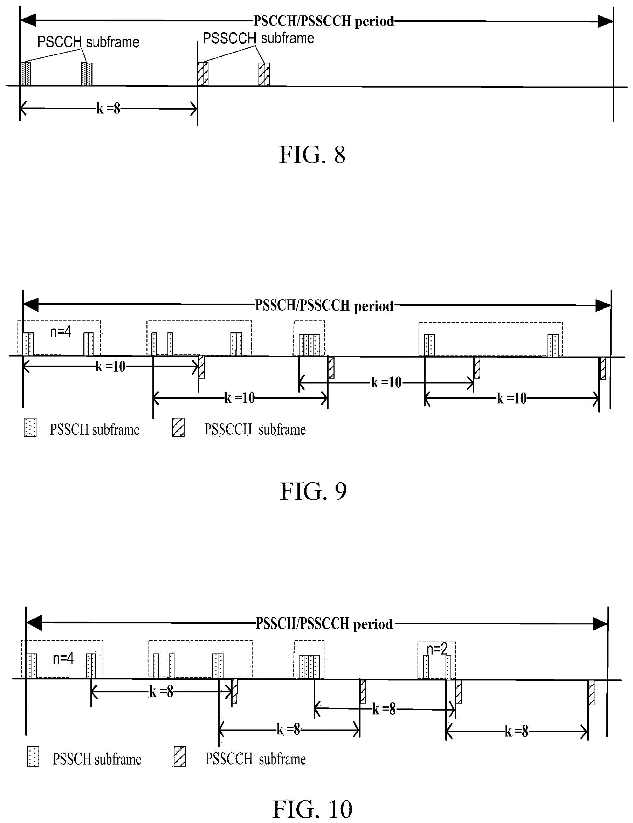

As shown in Figure 8, within a period, four PSCCH subframes are contained in the PSCCH resource pool and the system sets $k = 8$, thus it can be determined accordingly that four PSSCCH subframes are contained in the PSSCCH resource pool, located at subframe positions separated by an interval of 8 from the corresponding PSCCH subframes respectively.

The subframe configuration in the PSSCCH resource pool can be determined according to the subframe configuration indexes in the PSCCH resource pool without signaling indication, to achieve the effect of configuring the PSSCCH resource pool flexibly, adapting service requirements and reducing the signaling overhead.

Example 5: the PSSCCH subframe, $n$: 1 relationship, is determined according to the PSSCH resource pool.

In the D2D communication system, the subframes contained in the PSSCCH resource pool are determined according to the PSSCH subframes contained in the PSSCH resource pool and a relationship between Npsscch, the number of the PSSCCH subframes and Npssch, the number of the PSSCH subframes is:

$$ N_{psscch} = \left\lceil \frac{N_{pssch}}{n} \right\rceil, $$

where $n$ is a positive integer, and $n$ is a constant value set by the system, or is indicated by the high layer signaling.

The period of the PSSCCH resource pool is the same as the period of the PSSCH resource pool period, every n PSSCH subframes correspond to one PSSCCH subframe, and the subframe interval between each PSSCCH subframe and the corresponding $n$ PSSCH subframes is k, where $k$ is an integer, $k$ can be set to a constant value by the system, or indicated by the high layer signaling. $k$ represents a subframe interval between a PSSCCH subframe and the first PSSCH subframe in the corresponding $n$ PSSCH subframes, or $k$ represents a subframe interval between a PSSCCH subframe and the last PSSCH subframe in the corresponding n PSSCH subframes.

When the subframe interval between each PSSCCH subframe and the first PSSCH subframe in the corresponding $n$ PSSCH subframes is defined to be $k$ by the system, $k$ is a constant, $n = 4$, k is indicated by SIB signaling, and $k = 10$, then the configuration result that the PSSCCH subframes contained in the PSSCCH resource pool within the period are determined according to the PSSCH subframes is as shown in FIG. 9.

When the subframe interval between each PSSCCH subframe and the last PSSCH subframe in the corresponding $n$ PSSCH subframes is defined to be $k$ by the system, $k$ and $n$ is indicated by SIB signaling, $n = 4$, and $k = 10$, then the configuration result that the PSSCCH subframes contained in the PSSCCH resource pool within the period are determined according to the PSSCH subframes is as shown in FIG. 10. If the number Npssch of PSSCH subframes in the PSSCH resource pool is not an integer multiple of n, then the remaining PSSCH subframes at the end of the period, whose number is less than n, is a set corresponding to one PSSCCH subframe.

The subframe configuration in the PSSCCH resource pool can be determined according to the subframe configuration indexes in the PSCCH resource pool without signaling indication, to achieve the effect of configuring the PSSCCH resource pool flexibly, adapting service requirements and reducing the signaling overhead.

Example 6: the RBs contained in the PSSCCH resource pool are determined according to the RBs in the PSCCH resource pool.

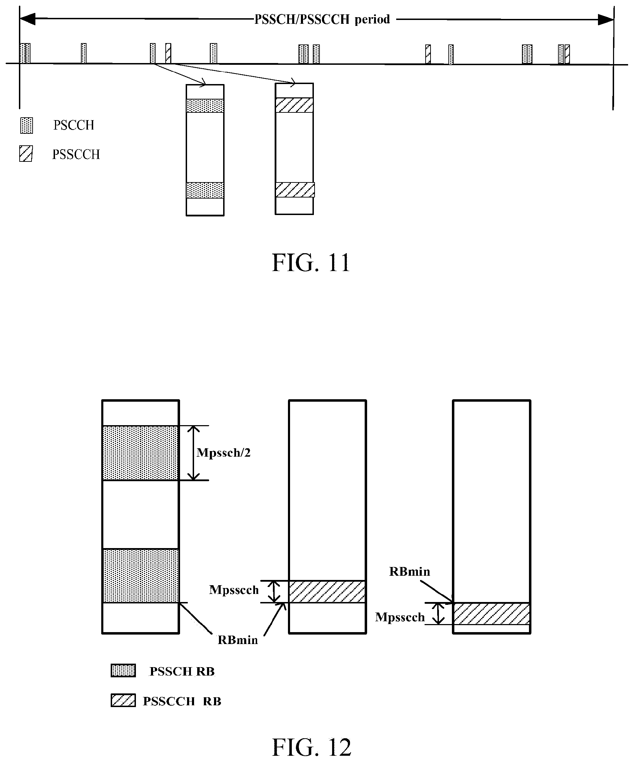

In the D2D communication system, the RBs contained in the PSSCCH resource pool are the same as those contained in the PSCCH resource pool and the RB configuration in the PSSCCH resource pool is not needed to be indicated by the signaling, as shown in FIG. 11.

The RB configuration in the PSSCCH resource pool is determined according to the RB configuration in the PSCCH resource pool without signaling indication, to achieve the effect of configuring the PSSCCH resource pool flexibly, adapting service requirements and reducing the signaling overhead.

Example 7: the RBs contained in the PSSCCH resource pool are determined according to the RBs in the PSSCH resource pool, m: 1 relationship.

In the D2D communication system, the RBs contained in the PSSCCH resource pool are determined according to the RBs contained in the PSSCH resource pool and a relationship between Mpsscch, the number of the RBs in the PSSCCH resource pool and Mpssch, the number of the RBs in the PSSCH resource pool is:

$$M_{psscch} = \left\lceil \frac{M_{pssch}}{m} \right\rceil,$$

where m is a positive integer, and m is a constant, or is indicated by the high layer signaling.

The number of the RBs in the PSSCCH resource pool is determined as above. Positions of the Mpsscch RBs in the PSSCCH resource pool in the frequency domain are determined according to positions of the RBs in the PSSCH resource pool. A RB position-index relationship can be determined according to a rule defined by the system or signaling indication:

When the system defines RB positions in the PSSCCH resource pool to be Mpsscch continuous RBs starting from the start RB position in the PSSCH resource pool, then the configuration result of the RBs in the PSSCCH resource pool can be determined according to the RB indexes in the PSSCH resource pool, the index of the start RB in the PSSCH resource pool is RB index = RBmin, then the index *i* of the Mpsscch RBs contained in the PSSCCH resource pool is: *i* = [RBmin, RBmin + 1, RBmin + 2, ..., RBmin + Mpsscch-1], or *i* = [RBmin-1, RBmin-2, RBmin-3, ..., RBmin-Mpsscch], as shown in FIG. 12.

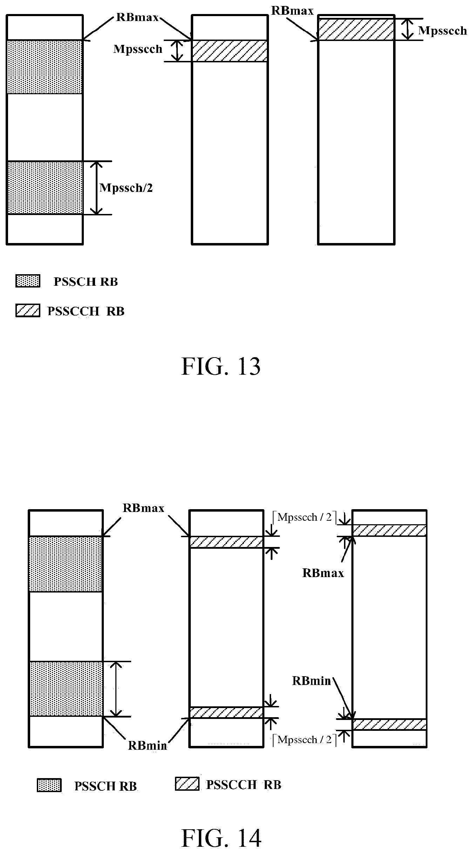

When the system defines RB positions in the PSSCCH resource pool to be Mpsscch continuous RBs starting from the end RB position in the PSSCH resource pool, then the configuration result of the RBs in the PSSCCH resource pool can be determined according to the RB indexes in the PSSCH resource pool, the index of the end RB in the PSSCH resource pool is RB index = RBmax, then the index i of the Mpsscch RBs contained in the PSSCCH resource pool is: i=[RBmax, RBmax-1, RBmax-2,..., RBmax-Mpsscch+1], or i=[RBmax+1, RBmax+2, RBmax+3,..., RBmax+Mpsscch], as shown in FIG. 13.

When the system defines RB positions in the PSSCCH resource pool to be $\lceil$Mpsscch / 2$\rceil$ continuous RBs starting from the start RB position and $\lceil$Mpsscch / 2$\rceil$ continuous RBs starting from the end RB position in the PSSCH resource pool, then the configuration result of the RBs in the PSSCCH resource pool can be determined according to the RB indexes in the PSSCH resource pool, the index of the start RB in the PSSCH resource pool is RB index = RBmin, the index of the end RB in the PSSCH resource pool is RB index = RBmax, then the index i of the Mpsscch RBs contained in the PSSCCH resource pool are:

$$i = [\text{RBmin, RBmin+1, RBmin+2},...,\text{RBmin+}\lceil \text{Mpsscch}/2 \rceil \text{-1}], [\text{RBmax, RBmax-1, RBmax-2}, ..., \text{RBmax-}\lceil \text{Mpsscch}/2 \rceil \text{+1}],$$

or

$$i = [\text{RBmin-1, RBmin-2, RBmin-3}, ...,\text{RBmin-}\lceil \text{Mpsscch}/2 \rceil], [\text{RBmax+1, RBmax+2, RBmax+3}, ..., \text{RBmax+}\lceil \text{Mpsscch}/2 \rceil].$$

as shown in FIG. 14.

The RB configuration in the PSSCCH resource pool is determined according to the RB indexes configuration in the PSSCH resource pool without signaling indication, to achieve the effect of configuring the PSSCCH resource pool flexibly, adapting service requirements and reducing the signaling overhead.

Example 8: the system defines a subframe configuration in the PSSCCH resource pool, and the RBs in the frequency domain are indicated by the high layer signaling.

In the D2D communication system, the subframe configuration of PSSCCH resource pool is fixed and defined by the system, and RB resources in the PSSCCH resource pool are further determined based on the parameters indicated by SIB signaling.

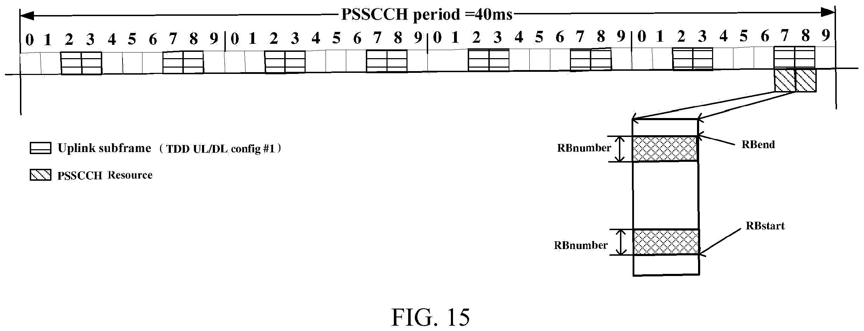

An example is as shown in FIG. 15, the system defines that the period of the PSSCCH resource pool is the same as the period of the PSCCH resource pool, and subframes in the PSCCH resource pool are the last two uplink subframes within each period. The RBs contained in the PSSCCH resource pool in the frequency domain are indicated by the SIB signaling of the system, and the parameters, RB-number, RB-start and RB-end, indicate the configured PSSCCH frequency domain resources. The configuration of the PSSCCH resource pool in the system is as shown in FIG. 15.

The subframe resources in the PSSCCH resource pool are defined by the system such that the corresponding PSSCCH resource pool can be configured effectively according to the network requirements; meanwhile the RB resources in the PSSCCH resource pool are indicated by the SIB signaling such that the configuration of the PSSCCH resource pool can be adaptively adjusted flexibly, to achieve the effect of making full use of system resources, coordinating interference, improving the resource utilization and reducing the signaling overhead.

Example 9: the system preconfigures a fixed number of PSSCCH subframes, and determines positions according to the PSSCH resource pool index.

In the D2D communication system, the number Mpsscch of the subframes contained in the PSSCCH resource pool is preconfigured by the system and the positions of the Mpsscch subframes in the PSSCCH resource pool are further determined according to the PSSCH subframes contained in the PSSCH resource pool.

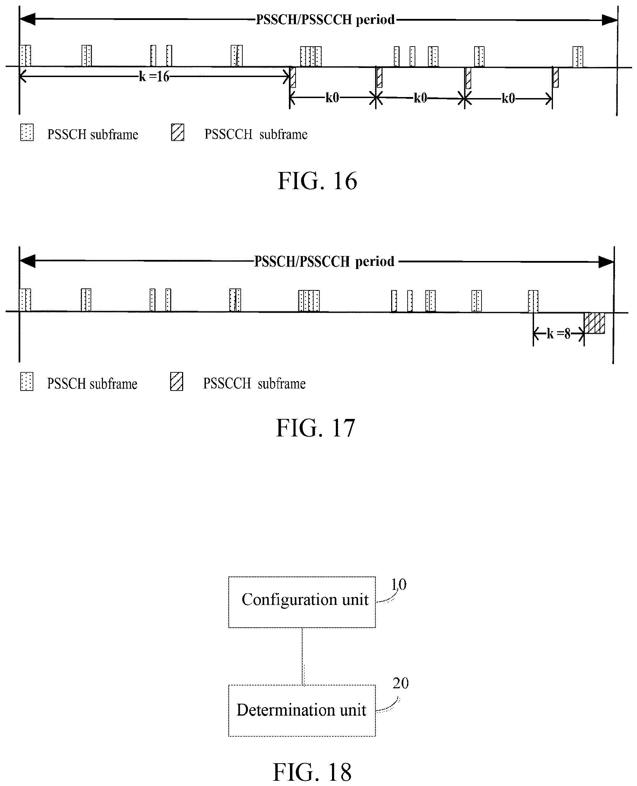

For example, the system preconfigures Mpsscch = 4, the period of the PSSCCH resource pool is the same as the period of the PSSCH resource pool, the Mpsscch PSSCCH subframes are distributed at equal interval, the subframe interval is a fixed value $k0,$ the subframe interval between the first PSSCCH subframe and the first PSSCH subframes within the period is k, where $k$ is an integer, and $k$ is set to a constant value or is indicated by the high layer signaling, and as shown in FIG. 16, $k$ is indicated by the high layer signaling, $k = 16$.

Or, the period of the PSSCCH resource pool is the same as the period of the PSSCH resource pool, the Mpsscch PSSCCH subframes are consecutive, the subframe interval between the first PSSCCH subframe and the last PSSCH subframe within the period is $k,$ where $k$ is an integer, and $k$ is set to a constant value or indicated by the high layer signaling, as shown in FIG. 17, $k$ is a constant value and $k = 8$.

The number of the subframes in the PSSCCH resource pool is pre-configured by the system and the positions of the PSSCCH subframes are determined according to the subframes in the PSSCH resource pool such that the configuration of the PSSCCH resource pool can be adaptively adjusted flexibly, to achieve the effect of making full use of system resources, coordinating interference, improving the resource utilization and reducing the signaling overhead.

An embodiment of the present invention further provides a resource pool configuration device, which can be used as a base station in practical applications for executing the above-described resource pool configuration method, and which, as shown in FIG. 18, includes a configuration unit 10 and a determination unit 20.

The configuration unit 10 is configured to configure a PSSCCH resource pool.

The determination unit 20 is configured to determine resources in the PSSCCH resource pool, the resources in the PSSCCH resource pool are used to carry feedback control information of physical sidelink sent by UE which performs D2D communication.

As one embodiment, the feedback control information of the physical sidelink includes at least one of the following: physical sidelink channel data receiving acknowledgment/non-acknowledgment information (A/N), physical sidelink channel state information (CSI), physical sidelink channel quality indicator (CQI), physical sidelink channel rank indication (RI) and physical sidelink channel precoding matrix indicator (PMI).

As one embodiment, the configuration unit 10 is further configured to configure time domain resources and/or frequency domain resources contained in the PSSCCH resource pool according to at least one of the following modes: system preconfiguration; system definition; high layer signaling indication; determination according to a physical sidelink control channel (PSCCH) resource pool; and determination according to a physical sidelink shared channel (PSSCH) resource pool.

As one embodiment, a period of the PSSCCH resource pool is T times a period of the PSCCH resource pool or the PSSCH resource pool, where T is a positive integer, and the value of T is a constant value or the value of T is configured by high layer signaling.

As one embodiment, the configuration unit 10 is further configured to define that one or more subframes are contained in the PSSCCH resource pool within a period when the time domain resources contained in the PSSCCH resource pool are defined by a system.

As one embodiment, the configuration unit 10 is further configured to define that one or more resource blocks (RBs) are contained in the PSSCCH resource pool when the frequency domain resources contained in the PSSCCH resource pool are defined by the system.

As one embodiment, the configuration unit 10 is further configured to determine a preconfiguration of the PSSCCH resource pool according to a bandwidth of the system and/or a duplex mode of the system when the PSSCCH resource pool is preconfigured by the system, the preconfiguration of the PSSCCH resource pool is fixed.

As one embodiment, the preconfiguration of the PSSCCH resource pool includes at least one of the following: the period of the PSSCCH resource pool; the time domain resources contained in the PSSCCH resource pool; and the frequency domain resources contained in the PSSCCH resource pool, herein the time domain resources of the PSSCCH resource pool include the one or more subframes within the period, and the frequency domain resources of the PSSCCH resource pool include the one or more RBs within the bandwidth of the system.

As one embodiment, the configuration unit 10 is further configured to, when the time domain resources contained in the PSSCCH resource pool are indicated by system preconfiguration and/or high layer signaling, indicate the one or more subframes contained in the PSSCCH resource pool within the period by N-bit indication information in a bitmap manner. Herein, when a corresponding bit in an N-bit bitmap is indicated to be 1, it is indicated that a corresponding subframe is the resource in the PSSCCH resource pool, and when a corresponding bit in the N-bit bitmap is indicated to be 0, it is indicated that a corresponding subframe is not the resource in the PSSCCH resource pool; or when a corresponding bit in the N-bit bitmap is indicated to be 0, it is indicated that a corresponding subframe is the resource in the PSSCCH resource pool, and when a corresponding bit in the N-bit bitmap is indicated to be 1, it is indicated that a corresponding subframe is not the resource in the PSSCCH resource pool.

As one embodiment, the N-bit bitmap is mapped once within the period, or repeatedly cyclic mapped within the period.

As one embodiment, the configuration unit 10 is further configured to, when the time domain resources contained in the PSSCCH resource pool are indicated by the system preconfiguration and/or high layer signaling, indicate a start position of the N-bit bitmap mapping relative to a boundary of the period by an offset, an offset indication uses a subframe as a unit.

As one embodiment, the configuration unit 10 is further configured to: when the frequency domain resources contained in the PSSCCH resource pool are indicated by the system preconfiguration and/or high layer signaling, indicate the one or more RB resources contained in the PSSCCH resource pool by the following parameters: the number of physical resource blocks (PRBs), a PRB start position and a PRB end position.

As one embodiment, when the PSSCCH resource pool is indicated by the high layer signaling, the high layer signaling is a system information block (SIB) or a radio resource control (RRC) message.

As one embodiment, when the high layer signaling is an SIB, the configuration of the PSSCCH resource pool is valid for all UEs which perform D2D communication in a cell or is valid for UE within a determined D2D group.

As one embodiment, when the high layer signaling is an RRC message indication, the configuration indication of the PSSCCH resource pool is contained in a device-to-device communication configuration (ProseCommConfig) information unit.

As one embodiment, the configuration unit 10 is further configured to: when the time domain resources contained in the PSSCCH resource pool are determined based on the PSCCH resource pool or the PSSCH resource pool, determine the subframes contained in the PSSCCH resource pool within the period according to the subframes contained in the PSCCH resource pool or the PSSCH resource pool.

As one embodiment, there is a one-to-one correspondence between the subframes contained in the PSSCCH resource pool and the subframes contained in the PSCCH resource pool or the PSSCH resource pool within the period, and a subframe interval between the PSSCCH subframe and the corresponding PSCCH subframe or the PSSCH subframe is $k$, where $k$ is an integer, and a value of $k$ is a constant value or the value of $k$ is configured by the high layer signaling.

As one embodiment, the PSSCCH resource pool contains the one or more PSSCCH subframes within the period, and among the multiple PSSCCH subframes, a subframe interval between a first PSSCCH subframe and a first or last PSCCH subframe in the PSCCH resource pool in the period is $k$; or a subframe interval between the first PSSCCH subframe in the PSSCCH resource pool and a first or last PSSCH subframe in the PSSCH resource pool within the period is $k$, where $k$ is an integer, and $k$ is a constant value or is configured by the high layer signaling.

As one embodiment, when the PSSCCH resource pool contains multiple subframes within the period, the multiple PSSCCH subframes are consecutive, or the multiple PSSCCH subframes are distributed at a fixed subframe interval.

As one embodiment, the configuration unit 10 is further configured to determine Npsscch, the number of the subframes contained in the PSSCCH resource pool according to Npscch, the number of the subframes in the PSCCH resource pool, or according to Npssch, the number of the subframes in the PSSCH resource pool. Herein, Npsscch is obtained by rounding up Npscch divided by $n$, or Npsscch is obtained by rounding up Npssch divided by $n$, where $n$ is a positive integer, and the value of $n$ is a constant value or the value of $n$ is configured by the high layer signaling.

As one embodiment, every $n$ PSCCH subframes or every $n$ PSSCH subframes correspond to one PSSCCH subframe in order in the period, the PSSCCH subframe satisfies one of the following conditions:

the subframe interval between the PSSCCH subframe and the first subframe of the corresponding $n$ PSCCH subframes or PSSCH subframes is $k$; and
the subframe interval between the PSSCCH subframe and the last subframe of the corresponding $n$ PSCCH subframes or PSSCH subframes is $k$, where $k$ is an integer, and the value of $k$ is a constant value or the value of $k$ is configured by the high layer signaling.

As one embodiment, the configuration unit 10 is further configured to: when the frequency domain resources contained in the PSSCCH resource pool are determined according to the PSCCH resource pool or the PSSCH resource pool, determine the RBs contained in the PSSCCH resource pool according to RBs contained in the PSCCH resource pool or the PSSCH resource pool.

As one embodiment, the PSSCCH resource pool contains the same RBs as in the PSCCH resource pool.

As one embodiment, Mpsscch, the number of the RBs contained in the PSSCCH resource pool is determined based on Mpscch, the number of the RBs contained in the PSCCH resource pool, or based on Mpssch, the number of the RBs contained in the PSSCH resource pool, where Mpsscch is obtained by rounding up Mpscch divided by $m$, or Mpsscch is obtained by rounding up Mpssch divided by $m$, where $m$ is a positive integer, and the value of $m$ is a constant value or the value of $m$ is configured by the high layer signaling.

As one embodiment, an RB contained in the PSSCCH resource pool is denoted by an RB index $i$, where $i$ satisfies one of the following conditions:

$$i = [\text{RBmin}, \text{RBmin} + 1, \text{RBmin} + 2, ..., \text{RBmin} + \text{Mpsscch-1}];$$

$$i = [\text{RBmin-1}, \text{RBmin-2}, \text{RBmin-3}, ..., \text{RBmin-Mpsscch}];$$

$$i = [\text{RBmax}, \text{RBmax-1}, \text{RBmax-2}, ..., \text{RBmax-Mpsscch} + 1]$$

$$i = [\text{RBmax} + 1, \text{RBmax} + 2, \text{RBmax} + 3, ..., \text{RBmax} + \text{Mpsscch}];$$

$$i = [\text{RBmin}, \text{RBmin} + 1, \text{RBmin} + 2, ..., \text{RBmin} + \lceil \text{Mpsscch}/2 \rceil -1], [\text{RBmax}, \text{RBmax-1}, \text{RBmax-2}, ..., \text{RBmax-} \lceil \text{Mpsscch}/2 \rceil +1];$$

$$i = [\text{RBmin-1}, \text{RBmin-2}, \text{RBmin-3}, ..., \text{RBmin-} \lceil \text{Mpsscch}/2 \rceil ], [\text{RBmax} + 1, \text{RBmax} + 2, \text{RBmax} + 3, ..., \text{RBmax} + \lceil \text{Mpsscch}/2 \rceil ].$$

Herein RBmin is the minimum index of the RBs contained in the PSCCH resource pool or the PSSCH resource pool, and RBmax is the maximum index of the RBs contained in the PSCCH resource pool or the PSSCH resource pool.

As one embodiment, the number of the PSSCCH resource pools satisfies one of the following conditions:

the number of PSSCCH resource pools is the same as the number of the PSCCH resource pools and there is a one-to-one correspondence between the PSSCCH resource pools and the PSCCH resource pools; and

the number of the PSSCCH resource pools is the same as the number of the PSSCH resource pools, and there is a one-to-one correspondence between the PSSCCH resource pools and the PSSCH resource pools.

In practical applications, the configuration unit 10 and the determination unit 20 in the resource pool configuration device may be implemented by a microprocessor (MCU), a logic programmable gate array (FPGA), and an application specific integrated circuit (ASIC).

An embodiment of the present invention further provides a computer storage medium, in which executable instructions are stored and used for executing the resource pool configuration method as shown in FIG.4.

One skilled in the art can understand that all or part of steps implementing the embodiments of the above-mentioned method may be completed by a program instructing related hardware, and the program may be stored in a computer readable storage medium. The program, when executed, performs the steps of the embodiments of the above-mentioned method. The storage medium includes various media, such as mobile storage device, random access memory (RAM), read-only memory (ROM), magnetic disk or compact disk, which can store program codes.

Or when the integrated units described in the present invention are implemented in the form of a software function module and sold or used as a stand-alone product, it may also be stored in a computer-readable storage medium. Based on such understanding, the scheme of the embodiments of the present invention may be embodied in the form of software product essentially or as a portion contributing to the related art. The computer software product is stored in a storage medium and includes multiple instructions to enable a computer device (which may be a personal computer, a server or a network device) to execute all or part of the method provided by each embodiment of the present invention. The storage medium described above includes various media, such as mobile storage device, RAM, ROM, magnetic disk or compact disk, which can store program codes.

The implementation modes described above are just specific embodiments of the present invention. However, the protection scope of the present invention is not limited thereto. One skilled in the art may easily conceive of variations or replacements within the scope defined by the appended claims. However, all these variations and replacements shall also be covered by the protection scope of the present invention. Therefore, the protection scope of the present invention shall be subjected to the protection scope defined by the claims.

**Claims**

1. A resource pool configuration method, comprising:

   configuring a physical sidelink second control channel resource pool;
   wherein the physical sidelink second control channel resource pool has periodicity, at least one subframe is contained in the physical sidelink second control channel resource pool within a period, and at least one resource block, RB, is contained in each subframe in the physical sidelink second control channel resource pool, resources in the second control channel resource pool are used by a user equipment which performs device-to-device, D2D, communication for carrying feedback control information of physical sidelink;
   **characterised in that**
   the period of the physical sidelink second control channel resource pool is an integer multiple of a period of a physical sidelink control channel, PSCCH, resource pool or a shared channel resource pool.

2. The method according to claim 1, wherein configuring at least one subframe in the physical sidelink second control channel resource pool, comprises:

   indicating an N-bit sequence by system preconfiguration or by high layer signaling, and the N-bit sequence indicating the at least one subframe contained in the physical sidelink second control channel resource pool within the period in a bitmap manner, wherein
   the N-bit sequence is mapped once within the period of the physical sidelink second control channel resource pool, or mapped repeatedly multiple times within the period.

3. The method according to claim 2, wherein configuring at least one subframe in the physical sidelink second control channel resource pool, comprises:
   indicating an offset by system preconfiguration or by high layer signaling, wherein the offset indicates a starting subframe of the N-bit sequence bitmap mapping relative to a boundary of the period of the physical sidelink second control channel resource pool.

4. The method according to claim 1, wherein configuring at least one subframe in the physical sidelink second control channel resource pool, comprises:
determining subframes contained in the physical sidelink second control channel resource pool according to subframes contained in the PSCCH resource pool, or according to subframes contained in the shared channel resource pool.

5. The method according to claim 4, wherein
there is a one-to-one correspondence between the subframes contained in the PSCCH resource pool and the subframes contained in the physical sidelink second control channel resource pool, and a subframe interval between a subframe contained in the PSCCH resource pool and the corresponding subframe contained in the physical sidelink second control channel resource pool is $k$; or
there is a one-to-one correspondence between the subframes contained in the shared channel resource pool and the subframes contained in the physical sidelink second control channel resource pool, and a subframe interval between a subframe contained in the shared channel resource pool and the corresponding subframe contained in the physical sidelink second control channel resource pool is $k$
where a value of $k$ is a constant value or the value of $k$ is configured by high layer signaling.

6. The method according to claim 4, wherein
a subframe interval between a first subframe contained in the physical sidelink second control channel resource pool and a first subframe or a last subframe contained in the PSCCH resource pool is k; or,
a subframe interval between a first subframe contained in the physical sidelink second control channel resource pool and a first subframe or a last subframe contained in the shared channel resource pool is $k$; where a value of $k$ is a constant value or the value of $k$ is configured by high layer signaling,
and,
the physical sidelink second control channel resource pool contains a plurality of subframes, the plurality of subframes contained in the physical sidelink second control channel resource pool start with the first subframe in the physical sidelink second control channel resource pool, and the plurality of subframes are consecutive; or the physical sidelink second control channel resource pool contains a plurality of subframes, the plurality of subframes contained in the physical sidelink second control channel resource pool start with the first subframe in the physical sidelink second control channel resource pool, and are distributed at a fixed subframe interval.

7. The method according to claim 4, wherein
a number of the subframes contained in the physical sidelink second control channel resource pool is determined according to a number of the subframes contained in the PSCCH resource pool, the number of the subframes contained in the physical sidelink second control channel resource pool is obtained by rounding up the number of the subframes contained in the PSCCH resource pool divided by n; or
a number of the subframes contained in the physical sidelink second control channel resource pool is determined according to a number of the subframes contained in the shared channel resource pool, the number of the subframes contained in the physical sidelink second control channel resource pool is obtained by rounding up the number of the subframes contained in the shared channel resource pool divided by $n$;
where a value of $n$ is a constant value or the value of $n$ is configured by high layer signaling.

8. The method according to claim 1, wherein configuring the at least one RB in the subframe in the physical sidelink second control channel resource pool, comprises that:

a number of the RBs contained in the subframe in the physical sidelink second control channel resource pool is determined according to a number of the RBs contained in the subframe in the PSCCH resource pool, the number of the RBs contained in the subframe in the physical sidelink second control channel resource pool is obtained by rounding up the number of the RBs contained in the subframe in the PSCCH resource pool divided by $m$; or
a number of the RBs contained in the subframe in the physical sidelink second control channel resource pool is determined according to a number of the RBs contained in the subframe in the shared channel resource pool, the number of the RBs contained in the subframe in the physical sidelink second control channel resource pool is obtained by rounding up the number of the RBs contained in the subframe in the shared channel resource pool divided by $m$;
where a value of $m$ is a constant value or the value of $m$ is configured by high layer signaling.

9. A resource pool configuration device, comprising:

a configuration unit (10) configured to configure a physical sidelink second control channel resource pool; and a determination unit (20) configured to determine resources in the physical sidelink second control channel resource pool, wherein the physical sidelink second control channel resource pool has periodicity, at least one subframe is contained in the physical sidelink second control channel resource pool within a period, and at least one resource block, RB, is contained in each subframe in the physical sidelink second control channel resource pool, resources in the physical sidelink second control channel resource pool are used by a user equipment which performs device-to-device, D2D, communication for carrying feedback control information of physical sidelink;

**characterised in that**

the period of the physical sidelink second control channel resource pool is an integer multiple of a period of a physical sidelink control channel, PSCCH, resource pool or a shared channel resource pool.

10. The device according to the claim 9, wherein the configuration unit (10) configures the physical sidelink second control channel resource pool, comprising:

according to an N-bit sequence indicated by system preconfiguration or by high layer signaling, configuring the at least one subframe contained in the physical sidelink second control channel resource pool within the period in a bitmap manner, wherein

the N-bit sequence is mapped once within the period, or mapped repeatedly multiple times within the period.

11. The device according to the claim 10, wherein the configuration unit (10) configures the physical sidelink second control channel resource pool, comprising:

according to an offset indicated by system preconfiguration or by high layer signaling, configuring a starting subframe of the N-bit sequence bitmap mapping relative to a boundary of the period of the physical sidelink second control channel resource pool.

12. The device according to the claim 9, wherein the determination unit (20) determines the subframes contained in the physical sidelink second control channel resource pool according to subframes contained in the PSCCH resource pool, or according to subframes contained in the shared channel resource pool.

13. The device according to the claim 12, wherein the determination unit (20) determines the subframes contained in the physical sidelink second control channel resource pool, comprising that:

there is a one-to-one correspondence between the subframes contained in the PSCCH resource pool and the subframes contained in the physical sidelink second control channel resource pool, according to the subframes contained in the PSCCH resource pool, determines the subframes contained in the physical sidelink second control channel resource pool, and a subframe interval between a subframe contained in the PSCCH resource pool and the corresponding subframe contained in the physical sidelink second control channel resource pool is $k$; or,

there is a one-to-one correspondence between the subframes contained in the shared channel resource pool and the subframes contained in the physical sidelink second control channel resource pool, according to the subframes contained in the shared channel resource pool, determines the subframes contained in the physical sidelink second control channel resource pool, and a subframe interval between a subframe contained in the shared channel resource pool and the corresponding subframe contained in the physical sidelink second control channel resource pool is $k$,

where a value of $k$ is a constant value or the value of $k$ is configured by high layer signaling.

14. The device according to the claim 12, wherein the determination unit (20) determines the subframes contained in the physical sidelink second control channel resource pool, comprising that:

according to a first subframe or a last subframe contained in the PSCCH resource pool, a first subframe contained in the physical sidelink second control channel resource pool is determined, a subframe interval between a first subframe contained in the physical sidelink second control channel resource pool and a first subframe or a last subframe contained in the PSCCH resource pool is $k$; or,

according to a first subframe or a last subframe contained in the shared channel resource pool, a first subframe contained in the physical sidelink second control channel resource pool is determined, a subframe interval between a first subframe contained in the physical sidelink second control channel resource pool and a first subframe or a last subframe contained in the shared channel resource pool is $k$; where a value of $k$ is a constant value or the value of $k$ is configured by high layer signaling,

and,

when the physical sidelink second control channel resource pool contains a plurality of subframes, the plurality of subframes contained in the physical sidelink second control channel resource pool start with a first subframe in the physical sidelink second control channel resource pool, and the plurality of subframes are consecutive; or the plurality of subframes contained in the physical sidelink second control channel resource pool start with a first subframe in the physical sidelink second control channel resource pool, and are distributed at a fixed subframe interval.

15. The device according to the claim 12, wherein the determination unit (20) determines the subframes contained in the physical sidelink second control channel resource pool, comprising that:

a number of the subframes contained in the physical sidelink second control channel resource pool is determined according to a number of the subframes contained in the PSCCH resource pool, the number of the subframes contained in the physical sidelink second control channel resource pool is obtained by rounding up the number of the subframes contained in the PSCCH resource pool divided by n; or

a number of the subframes contained in the physical sidelink second control channel resource pool is determined according to a number of the subframes contained in the shared channel resource pool, the number of the subframes contained in the physical sidelink second control channel resource pool is obtained by rounding up the number of the subframes contained in the shared channel resource pool divided by $n$;

where a value of $n$ is a constant value or the value of $n$ is configured by high layer signaling.

16. The device according to the claim 9, wherein the determination unit (20) determines the resources in the physical sidelink second control channel resource pool, comprising that:

a number of the RBs contained in the subframe in the physical sidelink second control channel resource pool is determined according to a number of the RBs contained in the subframe in the PSCCH resource pool, the number of the RBs contained in the subframe in the physical sidelink second control channel resource pool is obtained by rounding up the number of the RBs contained in the subframe in the PSCCH resource pool divided by $m$; or

a number of the RBs contained in the subframe in the physical sidelink second control channel resource pool is determined according to a number of the RBs contained in the subframe in the shared channel resource pool, the number of the RBs contained in the subframe in the physical sidelink second control channel resource pool is obtained by rounding up the number of the RBs contained in the subframe in the shared channel resource pool divided by $m$;

where a value of $m$ is a constant value or the value of $m$ is configured by high layer signaling.

**Patentansprüche**

1. Ressourcenpool-Konfigurationsverfahren, das Folgendes umfasst:

Konfigurieren eines Physical Sidelink Second Control Channel-Ressourcenpools;

wobei der Physical Sidelink Second Control Channel-Ressourcenpool eine Periodizität besitzt, mindestens ein Subframe in dem Physical Sidelink Second Control Channel-Ressourcenpool innerhalb einer Periode enthalten ist, und mindestens ein Ressourcenblock (RB) in jedem Subframe in dem Physical Sidelink Second Control Channel-Ressourcenpool enthalten ist,

Ressourcen in dem Second Control Channel-Ressourcenpool durch eine Nutzerausrüstung verwendet werden, die eine Device-to-Device (D2D)-Kommunikation ausführt, um Feedbacksteuerungsinformationen eines Physical Sidelink zu transportieren;

**dadurch gekennzeichnet, dass**

die Periode des Physical Sidelink Second Control Channel-Ressourcenpools ein ganzzahliges Vielfaches einer Periode eines Physical Sidelink Control Channel (PSCCH)-Ressourcenpools oder eines Shared Channel-Ressourcenpools ist.

2. Verfahren nach Anspruch 1, wobei das Konfigurieren mindestens eines Subframes in dem Physical Sidelink Second Control Channel-Ressourcenpool Folgendes umfasst:

Anzeigen einer N-Bit-Sequenz durch System-Vorkonfiguration oder durch High-Layer-Zeichengabe, und wobei die N-Bit-Sequenz den mindestens einen Subframe, der in dem Physical Sidelink Second Control Channel-Ressourcenpool innerhalb der Periode enthalten ist, in einer Bitmap-Form anzeigt, wobei die N-Bit-Sequenz einmal innerhalb der Periode des Physical Sidelink Second Control Channel-Ressourcenpools abgebildet wird oder wiederholt mehrmals innerhalb der Periode abgebildet wird.

3. Verfahren nach Anspruch 2, wobei das Konfigurieren mindestens eines Subframes in dem Physical Sidelink Second Control Channel-Ressourcenpool Folgendes umfasst:
Anzeigen eines Versatzes durch System-Vorkonfiguration oder durch High-Layer-Zeichengabe, wobei der Versatz einen Start-Subframe der N-Bit-Sequenz-Bitmapabbildung relativ zu einer Grenze der Periode des Physical Sidelink Second Control Channel-Ressourcenpools anzeigt.

4. Verfahren nach Anspruch 1, wobei das Konfigurieren mindestens eines Subframes in dem Physical Sidelink Second Control Channel-Ressourcenpool Folgendes umfasst:
Bestimmen von Subframes, die in dem Physical Sidelink Second Control Channel-Ressourcenpool enthalten sind, gemäß Subframes, die in dem PSCCH-Ressourcenpool enthalten sind, oder gemäß Subframes, die in dem Shared Channel-Ressourcenpool enthalten sind.

5. Verfahren nach Anspruch 4, wobei
es eine Eins-zu-eins-Entsprechung zwischen den Subframes, die in dem PSCCH-Ressourcenpool enthalten sind, und den Subframes, die in dem Physical Sidelink Second Control Channel-Ressourcenpool enthalten sind, gibt, und ein Subframe-Intervall zwischen einem Subframe, der in dem PSCCH-Ressourcenpool enthalten ist, und dem entsprechenden Subframe, der in dem Physical Sidelink Second Control Channel-Ressourcenpool enthalten ist, k ist; oder
es eine Eins-zu-eins-Entsprechung zwischen den Subframes, die in dem Shared Channel-Ressourcenpool enthalten sind, und den Subframes, die in dem Physical Sidelink Second Control Channel-Ressourcenpool enthalten sind, gibt, und ein Subframe-Intervall zwischen einem Subframe, der in dem Shared Channel-Ressourcenpool enthalten ist, und dem entsprechenden Subframe, der in dem Physical Sidelink Second Control Channel-Ressourcenpool enthalten ist, k ist,
wobei ein Wert von k ein konstanter Wert ist oder der Wert von k durch High-Layer-Zeichengabe konfiguriert wird.

6. Verfahren nach Anspruch 4, wobei
ein Subframe-Intervall zwischen einem ersten Subframe, der in dem Physical Sidelink Second Control Channel-Ressourcenpool enthalten ist, und einem ersten Subframe oder einem letzten Subframe, der in dem PSCCH-Ressourcenpool enthalten ist, k ist; oder
ein Subframe-Intervall zwischen einem ersten Subframe, der in dem Physical Sidelink Second Control Channel-Ressourcenpool enthalten ist, und einem ersten Subframe oder einem letzten Subframe, der in dem Shared Channel-Ressourcenpool enthalten ist, k ist; wobei ein Wert von k ein konstanter Wert ist oder der Wert von k durch High-Layer-Zeichengabe konfiguriert wird, und der Physical Sidelink Second Control Channel-Ressourcenpool mehrere Subframes enthält, die mehreren Subframes, die in dem Physical Sidelink Second Control Channel-Ressourcenpool enthalten sind, mit dem ersten Subframe in dem Physical Sidelink Second Control Channel-Ressourcenpool beginnen, und die mehreren Subframes aufeinanderfolgen; oder der Physical Sidelink Second Control Channel-Ressourcenpool mehrere Subframes enthält, die mehreren Subframes, die in dem Physical Sidelink Second Control Channel-Ressourcenpool enthalten sind, mit dem ersten Subframe in dem Physical Sidelink Second Control Channel-Ressourcenpool beginnen, und in einem festen Subframe-Intervall verteilt sind.

7. Verfahren nach Anspruch 4, wobei
eine Anzahl der Subframes, die in dem Physical Sidelink Second Control Channel-Ressourcenpool enthalten sind, gemäß einer Anzahl der Subframes bestimmt wird, die in dem PSCCH-Ressourcenpool enthalten sind, die Anzahl der Subframes, die in dem Physical Sidelink Second Control Channel-Ressourcenpool enthalten sind, durch Aufrunden der Anzahl der Subframes, die in dem PSCCH-Ressourcenpool enthalten sind, geteilt durch n, erhalten wird; oder
eine Anzahl der Subframes, die in dem Physical Sidelink Second Control Channel-Ressourcenpool enthalten sind, gemäß einer Anzahl der Subframes bestimmt wird, die in dem Shared Channel-Ressourcenpool enthalten sind, die Anzahl der Subframes, die in dem Physical Sidelink Second Control Channel-Ressourcenpool enthalten sind, durch Aufrunden der Anzahl der Subframes, die in dem Shared Channel-Ressourcenpool enthalten sind, geteilt durch n, erhalten wird;
wobei ein Wert von n ein konstanter Wert ist oder der Wert von n durch High-Layer-Zeichengabe konfiguriert wird.

8. Verfahren nach Anspruch 1, wobei das Konfigurieren des mindestens einen RB in dem Subframe in dem Physical Sidelink Second Control Channel-Ressourcenpool, umfasst, dass:

eine Anzahl der RBs, die in dem Subframe in dem Physical Sidelink Second Control Channel-Ressourcenpool enthalten sind, gemäß einer Anzahl der RBs bestimmt wird, die in dem Subframe in dem PSCCH-Ressourcenpool enthalten sind, die Anzahl der RBs, die in dem Subframe in dem Physical Sidelink Second Control Channel-Ressourcenpool enthalten sind, durch Aufrunden der Anzahl der RBs, die in dem Subframe in dem PSCCH-Ressourcenpool enthalten sind, geteilt durch m, erhalten wird; oder

eine Anzahl der RBs, die in dem Subframe in dem Physical Sidelink Second Control Channel-Ressourcenpool enthalten sind, gemäß einer Anzahl der RBs bestimmt wird, die in dem Subframe in dem Shared Channel-Ressourcenpool enthalten sind, die Anzahl der RBs, die in dem Subframe in dem Physical Sidelink Second Control Channel-Ressourcenpool enthalten sind, durch Aufrunden der Anzahl der RBs, die in dem Subframe in dem Shared Channel-Ressourcenpool enthalten sind, geteilt durch m, erhalten wird;

wobei ein Wert von m ein konstanter Wert ist oder der Wert von m durch High-Layer-Zeichengabe konfiguriert wird.

9. Ressourcenpool-Konfigurationsvorrichtung, die Folgendes umfasst:

eine Konfigurationseinheit (10), die dafür konfiguriert ist, einen Physical Sidelink Second Control Channel-Ressourcenpool zu konfigurieren; und

eine Bestimmungseinheit (20), die dafür konfiguriert ist, die Ressourcen in dem Physical Sidelink Second Control Channel-Ressourcenpool zu bestimmen, wobei der Physical Sidelink Second Control Channel-Ressourcenpool eine Periodizität besitzt, mindestens ein Subframe in dem Physical Sidelink Second Control Channel-Ressourcenpool innerhalb einer Periode enthalten ist, und mindestens ein Ressourcenblock (RB) in jedem Subframe in dem Physical Sidelink Second Control Channel-Ressourcenpool enthalten ist, Ressourcen in dem Physical Sidelink Second Control Channel-Ressourcenpool durch eine Nutzerausrüstung verwendet werden, die eine Device-to-Device (D2D)-Kommunikation ausführt, um Feedbacksteuerungsinformationen eines Physical Sidelink zu transportieren;

**dadurch gekennzeichnet, dass**

die Periode des Physical Sidelink Second Control Channel-Ressourcenpools ein ganzzahliges Vielfaches einer Periode eines Physical Sidelink Control Channel (PSCCH)-Ressourcenpools oder eines Shared Channel-Ressourcenpools ist.

10. Vorrichtung nach Anspruch 9, wobei der Vorgang, bei dem die Konfigurationseinheit (10) den Physical Sidelink Second Control Channel-Ressourcenpool konfiguriert, Folgendes umfasst:

gemäß einer N-Bit-Sequenz, die durch System-Vorkonfiguration oder durch High-Layer-Zeichengabe angezeigt wird, Konfigurieren des mindestens einen Subframes, der in dem Physical Sidelink Second Control Channel-Ressourcenpool enthalten ist, innerhalb der Periode in einer Bitmap-Form, wobei

die N-Bit-Sequenz einmal innerhalb der Periode abgebildet wird oder

wiederholt mehrmals innerhalb der Periode abgebildet wird.

11. Vorrichtung nach Anspruch 10, wobei der Vorgang, bei dem die Konfigurationseinheit (10) den Physical Sidelink Second Control Channel-Ressourcenpool konfiguriert, Folgendes umfasst:

gemäß einem Versatz, der durch System-Vorkonfiguration oder durch High-Layer-Zeichengabe angezeigt wird, Konfigurieren eines Start-Subframes der N-Bit-Sequenz-Bitmapabbildung relativ zu einer Grenze der Periode des Physical Sidelink Second Control Channel-Ressourcenpools.

12. Vorrichtung nach Anspruch 9, wobei die Bestimmungseinheit (20) die Subframes, die in dem Physical Sidelink Second Control Channel-Ressourcenpool enthalten sind, gemäß Subframes, die in dem PSCCH-Ressourcenpool enthalten sind, oder gemäß Subframes, die in dem Shared Channel-Ressourcenpool enthalten sind, bestimmt.

13. Vorrichtung nach Anspruch 12, wobei der Vorgang, bei dem die Bestimmungseinheit (20) die Subframes bestimmt, die in dem Physical Sidelink Second Control Channel-Ressourcenpool enthalten sind, umfasst, dass:

es eine Eins-zu-eins-Entsprechung zwischen den Subframes, die in dem PSCCH-Ressourcenpool enthalten sind, und den Subframes, die in dem Physical Sidelink Second Control Channel-Ressourcenpool enthalten sind, gibt; gemäß den Subframes, die in dem PSCCH-Ressourcenpool enthalten sind, die Subframes bestimmt werden, die in dem Physical Sidelink Second Control Channel-Ressourcenpool enthalten sind, und ein Subframe-Intervall zwischen einem Subframe, der in dem PSCCH-Ressourcenpool enthalten ist, und dem entsprechenden Subframe, der in dem Physical Sidelink Second Control Channel-Ressourcenpool enthalten ist, k ist; oder

es eine Eins-zu-eins-Entsprechung zwischen den Subframes, die in dem Shared Channel-Ressourcenpool enthalten sind, und den Subframes, die in dem Physical Sidelink Second Control Channel-Ressourcenpool enthalten sind, gibt; gemäß den Subframes, die in dem Shared Channel-Ressourcenpool enthalten sind, die Subframes bestimmt werden, die in dem Physical Sidelink Second Control Channel-Ressourcenpool enthalten sind, und ein Subframe-Intervall zwischen einem Subframe, der in dem Shared Channel-Ressourcenpool enthalten ist, und dem entsprechenden Subframe, der in dem Physical Sidelink Second Control Channel-Ressourcenpool enthalten ist, k ist,

wobei ein Wert von k ein konstanter Wert ist oder der Wert von k durch High-Layer-Zeichengabe konfiguriert wird.

14. Vorrichtung nach Anspruch 12, wobei der Vorgang, bei dem die Bestimmungseinheit (20) die Subframes bestimmt, die in dem Physical Sidelink Second Control Channel-Ressourcenpool enthalten sind, umfasst, dass:

gemäß einem ersten Subframe oder einem letzten Subframe, der in dem PSCCH-Ressourcenpool enthalten ist, ein erster Subframe, der in dem Physical Sidelink Second Control Channel-Ressourcenpool enthalten ist, bestimmt wird, ein Subframe-Intervall zwischen einem ersten Subframe, der in dem Physical Sidelink Second Control Channel-Ressourcenpool enthalten ist, und einem ersten Subframe oder einem letzten Subframe, der in dem PSCCH-Ressourcenpool enthalten ist, k ist; oder

gemäß einem ersten Subframe oder einem letzten Subframe, der in dem Shared Channel-Ressourcenpool enthalten ist, ein erster Subframe, der in dem Physical Sidelink Second Control Channel-Ressourcenpool enthalten ist, bestimmt wird, ein Subframe-Intervall zwischen einem ersten Subframe, der in dem Physical Sidelink Second Control Channel-Ressourcenpool enthalten ist, und einem ersten Subframe oder einem letzten Subframe, der in dem Shared Channel-Ressourcenpool enthalten ist, k ist;

wobei ein Wert von k ein konstanter Wert ist oder der Wert von k durch High-Layer-Zeichengabe konfiguriert wird, und

wenn der Physical Sidelink Second Control Channel-Ressourcenpool mehrere Subframes enthält, die mehreren Subframes, die in dem Physical Sidelink Second Control Channel-Ressourcenpool enthalten sind, mit einem ersten Subframe in dem Physical Sidelink Second Control Channel-Ressourcenpool beginnen und die mehreren Subframes aufeinanderfolgen;

oder die mehreren Subframes, die in dem Physical Sidelink Second Control Channel-Ressourcenpool enthalten sind, mit einem ersten Subframe in dem Physical Sidelink Second Control Channel-Ressourcenpool beginnen und in einem festen Subframe-Intervall verteilt sind.

15. Vorrichtung nach Anspruch 12, wobei der Vorgang, bei dem die Bestimmungseinheit (20) die Subframes bestimmt, die in dem Physical Sidelink Second Control Channel-Ressourcenpool enthalten sind, umfasst, dass:

eine Anzahl der Subframes, die in dem Physical Sidelink Second Control Channel-Ressourcenpool enthalten sind, gemäß einer Anzahl der Subframes bestimmt wird, die in dem PSCCH-Ressourcenpool enthalten sind, die Anzahl der Subframes, die in dem Physical Sidelink Second Control Channel-Ressourcenpool enthalten sind, durch Aufrunden der Anzahl der Subframes, die in dem PSCCH-Ressourcenpool enthalten sind, geteilt durch n, erhalten wird; oder

eine Anzahl der Subframes, die in dem Physical Sidelink Second Control Channel-Ressourcenpool enthalten sind, gemäß einer Anzahl der Subframes bestimmt wird, die in dem Shared Channel-Ressourcenpool enthalten sind, die Anzahl der Subframes, die in dem Physical Sidelink Second Control Channel-Ressourcenpool enthalten sind, durch Aufrunden der Anzahl der Subframes, die in dem Shared Channel-Ressourcenpool enthalten sind, geteilt durch n, erhalten wird;

wobei ein Wert von n ein konstanter Wert ist oder der Wert von n durch High-Layer-Zeichengabe konfiguriert wird.

16. Vorrichtung nach Anspruch 9, wobei der Vorgang, bei dem die Bestimmungseinheit (20) die Ressourcen in dem Physical Sidelink Second Control Channel-Ressourcenpool bestimmt, umfasst, dass:

eine Anzahl der RBs, die in dem Subframe in dem Physical Sidelink Second Control Channel-Ressourcenpool enthalten sind, gemäß einer Anzahl der RBs bestimmt wird, die in dem Subframe in dem PSCCH-Ressourcenpool enthalten sind, die Anzahl der RBs, die in dem Subframe in dem Physical Sidelink Second Control Channel-Ressourcenpool enthalten sind, durch Aufrunden der Anzahl der RBs, die in dem Subframe in dem PSCCH-Ressourcenpool enthalten sind, geteilt durch m, erhalten wird; oder
eine Anzahl der RBs, die in dem Subframe in dem Physical Sidelink Second Control Channel-Ressourcenpool enthalten sind, gemäß einer Anzahl der RBs bestimmt wird, die in dem Subframe in dem Shared Channel-Ressourcenpool enthalten sind, die Anzahl der RBs, die in dem Subframe in dem Physical Sidelink Second Control Channel-Ressourcenpool enthalten sind, durch Aufrunden der Anzahl der RBs, die in dem Subframe in dem Shared Channel-Ressourcenpool enthalten sind, geteilt durch m, erhalten wird;
wobei ein Wert von m ein konstanter Wert ist oder der Wert von m durch High-Layer-Zeichengabe konfiguriert wird.

**Revendications**

1. Procédé de configuration d'ensemble de ressources, comprenant :

   la configuration d'un deuxième ensemble de ressources de canal de commande de liaison latérale physique ;
   dans lequel le deuxième ensemble de ressources de canal de commande de liaison latérale physique présente une périodicité, au moins une sous-trame est contenue dans le deuxième ensemble de ressources de canal de commande de liaison latérale physique au cours d'une période, et au moins un bloc de ressources, RB, est contenu dans chaque sous-trame dans le deuxième ensemble de ressources de canal de commande de liaison latérale physique, des ressources dans le deuxième ensemble de ressources de canal de commande sont utilisées par un équipement d'utilisateur qui effectue une communication de dispositif à dispositif, D2D, pour porter des informations de commande de rétroaction de liaison latérale physique ;
   **caractérisé en ce que**
   la période du deuxième ensemble de ressources de canal de commande de liaison latérale physique est un nombre entier multiple d'une période d'un ensemble de ressources de canal de commande de liaison latérale physique, PSCCH, ou d'un ensemble de ressources de canal partagé.

2. Procédé selon la revendication 1, dans lequel la configuration d'au moins une sous-trame dans le deuxième ensemble de ressources de canal de commande de liaison latérale physique comprend :

   l'indication d'une séquence de N bits par une préconfiguration de système ou par une signalisation de couche haute, et la séquence de N bits indiquant l'au moins une sous-trame contenue dans le deuxième ensemble de ressources de canal de commande de liaison latérale physique au cours de la période d'une manière de bitmap, dans lequel
   la séquence de N bits est mappée une fois au cours de la période du deuxième ensemble de ressources de canal de commande de liaison latérale physique ou est mappée plusieurs fois à répétition au cours de la période.

3. Procédé selon la revendication 2, dans lequel la configuration d'au moins une sous-trame dans le deuxième ensemble de ressources de canal de commande de liaison latérale physique comprend :
   l'indication d'un décalage par préconfiguration de système ou par signalisation de couche haute, dans lequel le décalage indique une sous-trame de début du mappage de bitmap de séquences de N bits par rapport à une frontière de la période du deuxième ensemble de ressources de canal de commande de liaison latérale physique.

4. Procédé selon la revendication 1, dans lequel la configuration d'au moins une sous-trame dans le deuxième ensemble de ressources de canal de commande de liaison latérale physique comprend :
   la détermination de sous-trames contenues dans le deuxième ensemble de ressources de canal de commande de liaison latérale physique en fonction de sous-trames contenues dans l'ensemble de ressources PSCCH ou en fonction de sous-trames contenues dans l'ensemble de ressources de canal partagé.

5. Procédé selon la revendication 4, dans lequel
   il existe une correspondance d'une à une entre les sous-trames contenues dans l'ensemble de ressources PSCCH et les sous-trames contenues dans le deuxième ensemble de ressources de canal de commande de liaison latérale physique, et un intervalle de sous-trames entre une sous-trame contenue dans l'ensemble de ressources PSCCH et la sous-trame correspondante contenue dans le deuxième ensemble de ressources de canal de commande de liaison latérale physique est k ; ou
   il existe une correspondance d'une à une entre les sous-trames contenues dans l'ensemble de ressources de canal partagé et les sous-trames contenues dans le deuxième ensemble de ressources de canal de commande de liaison latérale physique, et un intervalle de sous-trames entre une sous-trame contenue dans l'ensemble de ressources de canal partagé et la sous-trame correspondante contenue dans le deuxième ensemble de ressources de canal de commande de liaison latérale physique est k ;

où une valeur de k est une valeur constante ou la valeur de k est configurée par une signalisation de couche haute.

6. Procédé selon la revendication 4, dans lequel
un intervalle de sous-trames entre une première sous-trame contenue dans le deuxième ensemble de ressources de canal de commande de liaison latérale physique et une première sous-trame ou une dernière sous-trame contenue dans l'ensemble de ressources PSCCH est k ; ou
un intervalle de sous-trames entre une première sous-trame contenue dans le deuxième ensemble de ressources de canal de commande de liaison latérale physique et une première sous-trame ou une dernière sous-trame contenue dans l'ensemble de ressources de canal partagé est k ; où une valeur de k est une valeur constante ou la valeur de k est configurée par une signalisation de couche haute,
et,
le deuxième ensemble de ressources de canal de commande de liaison latérale physique contient une pluralité de sous-trames, la pluralité de sous-trames contenues dans le deuxième ensemble de ressources de canal de commande de liaison latérale physique commence à la première sous-trame dans le deuxième ensemble de ressources de canal de commande de liaison latérale physique, et la pluralité de sous-trames sont consécutives ; ou le deuxième ensemble de ressources de canal de commande de liaison latérale physique contient une pluralité de sous-trames, la pluralité de sous-trames contenues dans le deuxième ensemble de ressources de canal de commande de liaison latérale physique commence à la première sous-trame dans le deuxième ensemble de ressources de canal de commande de liaison latérale physique, et sont distribuées à un intervalle de sous-trames fixe.

7. Procédé selon la revendication 4, dans lequel
un nombre des sous-trames contenues dans le deuxième ensemble de ressources de canal de commande de liaison latérale physique est déterminé en fonction d'un nombre des sous-trames contenues dans l'ensemble de ressources PSCCH, le nombre des sous-trames contenues dans le deuxième ensemble de ressources de canal de commande de liaison latérale physique est obtenu par l'arrondissement du nombre des sous-trames contenues dans l'ensemble de ressources PSCCH divisé par n ; ou
un nombre des sous-trames contenues dans le deuxième ensemble de ressources de canal de commande de liaison latérale physique est déterminé en fonction d'un nombre des sous-trames contenues dans l'ensemble de ressources de canal partagé, le nombre des sous-trames contenues dans le deuxième ensemble de ressources de canal de commande de liaison latérale physique est obtenu par l'arrondissement du nombre des sous-trames contenues dans l'ensemble de ressources de canal partagé divisé par n ;
où une valeur de n est une valeur constante ou la valeur de n est configurée par une signalisation de couche haute.

8. Procédé selon la revendication 1, dans lequel la configuration de l'au moins un RB dans la sous-trame dans le deuxième ensemble de ressources de canal de commande de liaison latérale physique comprend :

un nombre des RB contenus dans la sous-trame dans le deuxième ensemble de ressources de canal de commande de liaison latérale physique est déterminé en fonction d'un nombre des RB contenus dans la sous-trame dans l'ensemble de ressources PSCCH, le nombre des RB contenus dans la sous-trame dans le deuxième ensemble de ressources de canal de commande de liaison latérale physique est obtenu par l'arrondissement du nombre des RB contenus dans la sous-trame dans l'ensemble de ressources PSCCH divisé par m ; ou
un nombre des RB contenus dans la sous-trame dans le deuxième ensemble de ressources de canal de commande de liaison latérale physique est déterminé en fonction d'un nombre des RB contenus dans la sous-trame dans l'ensemble de ressources de canal partagé, le nombre des RB contenus dans la sous-trame dans le deuxième ensemble de ressources de canal de commande de liaison latérale physique est obtenu par l'arrondissement du nombre des RB contenus dans la sous-trame dans l'ensemble de ressources de canal partagé divisé par m ;
où une valeur de m est une valeur constante ou la valeur de m est configurée par une signalisation de couche haute.

9. Dispositif de configuration d'ensemble de ressources, comprenant :

une unité de configuration (10) configurée pour la configuration d'un deuxième ensemble de ressources de canal de commande de liaison latérale physique ; et
une unité de détermination (20) configurée pour la détermination de ressources dans le deuxième ensemble de ressources de commande de liaison latérale physique, dans lequel le deuxième ensemble de ressources de canal de commande de liaison latérale physique présente une périodicité, au moins une sous-trame est contenue dans le deuxième ensemble de ressources de canal de commande de liaison latérale physique au cours d'une période, et au moins un bloc de ressources, RB, est contenu dans chaque sous-trame dans le deuxième ensemble de ressources de canal de commande de liaison latérale physique, des ressources dans le deuxième ensemble de ressources de canal de commande sont utilisées par un équipement d'utilisateur qui effectue une communication de dispositif à dispositif, D2D, pour porter des informations de commande de rétroaction de liaison latérale physique ;

**caractérisé en ce que**

la période du deuxième ensemble de ressources de canal de commande de liaison latérale physique est un nombre entier multiple d'une période d'un ensemble de ressources de canal de commande de liaison latérale physique, PSCCH, ou d'un ensemble de ressources de canal partagé.

10. Dispositif selon la revendication 9, dans lequel l'unité de configuration (10) effectue la configuration du deuxième ensemble de ressources de canal de commande de liaison latérale physique, comprenant :

en fonction d'une séquence de N bits indiquée par une préconfiguration de système ou par une signalisation de couche haute, la configuration de l'au moins une sous-trame contenue dans le deuxième ensemble de ressources de canal de commande de liaison latérale physique au cours de la période d'une manière de bitmap, dans lequel

la séquence de N bits est mappée une fois au cours de la période ou est mappée plusieurs fois à répétition au cours de la période.

11. Dispositif selon la revendication 10, dans lequel l'unité de configuration (10) effectue la configuration du deuxième ensemble de ressources de canal de commande de liaison latérale physique, comprenant :

en fonction d'un décalage indiqué par préconfiguration de système ou par signalisation de couche haute, la configuration d'une sous-trame de début du mappage de bitmap de séquences de N bits par rapport à une frontière de la période du deuxième ensemble de ressources de canal de commande de liaison latérale physique.

12. Dispositif selon la revendication 9, dans lequel l'unité de détermination (20) effectue la détermination des sous-trames contenues dans le deuxième ensemble de ressources de canal de commande de liaison latérale physique en fonction de sous-trames contenues dans l'ensemble de ressources PSCCH ou en fonction de sous-trames contenues dans l'ensemble de ressources de canal partagé.

13. Dispositif selon la revendication 12, dans lequel l'unité de détermination (20) effectue la détermination des sous-trames contenues dans le deuxième ensemble de ressources de canal de commande de liaison latérale physique, comprenant :

il existe une correspondance d'une à une entre les sous-trames contenues dans l'ensemble de ressources PSCCH et les sous-trames contenues dans le deuxième ensemble de ressources de canal de commande de liaison latérale physique, en fonction des sous-trames contenues dans l'ensemble de ressources PSCCH, la détermination des sous-trames contenues dans le deuxième ensemble de ressources de canal de commande de liaison latérale physique, et un intervalle de sous-trames entre une sous-trame contenue dans l'ensemble de ressources PSCCH et la sous-trame correspondante contenue dans le deuxième ensemble de ressources de canal de commande de liaison latérale physique est k ; ou

il existe une correspondance d'une à une entre les sous-trames contenues dans l'ensemble de ressources de canal partagé et les sous-trames contenues dans le deuxième ensemble de ressources de canal de commande de liaison latérale physique, en fonction des sous-trames contenues dans l'ensemble de ressources de canal partagé, la détermination des sous-trames contenues dans le deuxième ensemble de ressources de canal de commande de liaison latérale physique, et un intervalle de sous-trames entre une sous-trame contenue dans l'ensemble de ressources de canal partagé et la sous-trame correspondante contenue dans le deuxième ensemble de ressources de canal de commande de liaison latérale physique est k ;

où une valeur de k est une valeur constante ou la valeur de k est configurée par une signalisation de couche haute.

14. Dispositif selon la revendication 12, dans lequel l'unité de détermination (20) effectue la détermination des sous-trames contenues dans le deuxième ensemble de ressources de canal de commande de liaison latérale physique, comprenant :

en fonction d'une première sous-trame ou d'une dernière sous-trame contenue dans l'ensemble de ressources PSCCH, une première sous-trame contenue dans le deuxième ensemble de ressources de canal de commande de liaison latérale physique est déterminée, un intervalle de sous-trames entre une première sous-trame contenue dans le deuxième ensemble de ressources de canal de commande de liaison latérale physique et une première sous-trame ou une dernière sous-trame contenue dans l'ensemble de ressources PSCCH est k ; ou en fonction d'une première sous-trame ou d'une dernière sous-trame contenue dans l'ensemble de ressources de canal partagé, une première sous-trame contenue dans le deuxième ensemble de ressources de canal de commande de liaison latérale physique est déterminée, un intervalle de sous-trames entre une première sous-trame contenue dans le deuxième ensemble de ressources de canal de commande de liaison latérale physique et une première sous-trame ou une dernière sous-trame contenue dans l'ensemble de ressources de canal partagé est k ; où une valeur de k est une valeur constante ou la valeur de k est configurée par une signalisation de couche haute,

et,

lorsque le deuxième ensemble de ressources de canal de commande de liaison latérale physique contient une pluralité de sous-trames, la pluralité de sous-trames contenues dans le deuxième ensemble de ressources de canal de commande de liaison latérale physique commence à une première sous-trame dans le deuxième ensemble de ressources de canal de commande de liaison latérale physique, et la pluralité de sous-trames sont consécutives ; ou

la pluralité de sous-trames contenues dans le deuxième ensemble de ressources de canal de commande de liaison latérale physique commence à une première sous-trame dans le deuxième ensemble de ressources de canal de commande de liaison latérale physique, et sont distribuées à un intervalle de sous-trames fixe.

15. Dispositif selon la revendication 12, dans lequel l'unité de détermination (20) effectue la détermination des sous-trames contenues dans le deuxième ensemble de ressources de canal de commande de liaison latérale physique, comprenant :

un nombre des sous-trames contenues dans le deuxième ensemble de ressources de canal de commande de liaison latérale physique est déterminé en fonction d'un nombre des sous-trames contenues dans l'ensemble de ressources PSCCH, le nombre des sous-trames contenues dans le deuxième ensemble de ressources de canal de commande de liaison latérale physique est obtenu par l'arrondissement du nombre des sous-trames contenues dans l'ensemble de ressources PSCCH divisé par n ; ou

un nombre des sous-trames contenues dans le deuxième ensemble de ressources de canal de commande de liaison latérale physique est déterminé en fonction d'un nombre des sous-trames contenues dans l'ensemble de ressources de canal partagé, le nombre des sous-trames contenues dans le deuxième ensemble de ressources de canal de commande de liaison latérale physique est obtenu par l'arrondissement du nombre des sous-trames contenues dans l'ensemble de ressources de canal partagé divisé par n ;

où une valeur de n est une valeur constante ou la valeur de n est configurée par une signalisation de couche haute.

16. Dispositif selon la revendication 9, dans lequel l'unité de détermination (20) effectue la détermination des ressources dans le deuxième ensemble de ressources de canal de commande de liaison latérale physique, comprenant :

un nombre des RB contenus dans la sous-trame dans le deuxième ensemble de ressources de canal de commande de liaison latérale physique est déterminé en fonction d'un nombre des RB contenus dans la sous-trame dans l'ensemble de ressources PSCCH, le nombre des RB contenus dans la sous-trame dans le deuxième ensemble de ressources de canal de commande de liaison latérale physique est obtenu par l'arrondissement du nombre des RB contenus dans la sous-trame dans l'ensemble de ressources PSCCH divisé par m ; ou

un nombre des RB contenus dans la sous-trame dans le deuxième ensemble de ressources de canal de commande de liaison latérale physique est déterminé en fonction d'un nombre des RB contenus dans la sous-trame dans l'ensemble de ressources de canal partagé, le nombre des RB contenus dans la sous-trame dans le deuxième ensemble de ressources de canal de commande de liaison latérale physique est obtenu par l'arrondissement du nombre des RB contenus dans la sous-trame dans l'ensemble de ressources de canal partagé divisé par m ;

où une valeur de m est une valeur constante ou la valeur de m est configurée par une signalisation de couche haute.

FIG. 1

FIG. 2

One uplink slot $T_{\text{slot}}$

SC-FDMA symbols

$N_{\text{symb}}^{\text{UL}}$

$k = N_{\text{RB}}^{\text{UL}} N_{\text{sc}}^{\text{RB}} - 1$

Resource block

$N_{\text{symb}}^{\text{UL}} \times N_{\text{sc}}^{\text{RB}}$ resource elements

Resource element $(k, l)$

$N_{\text{RB}}^{\text{UL}} \times N_{\text{sc}}^{\text{RB}}$ Subcarriers

$N_{\text{sc}}^{\text{RB}}$ Subcarriers

$k = 0$

$l = 0$        $l = N_{\text{symb}}^{\text{UL}} - 1$

FIG. 3

```
┌─────────────────────────────────────┐  101
│   Configure a PSSCCH resource pool   │
└─────────────────────────────────────┘
                    │
                    ▼
┌─────────────────────────────────────┐  102
│        Determine resources in        │
│      the PSSCCH resource pool        │
└─────────────────────────────────────┘
```

FIG. 4

FIG. 5

FIG. 6

FIG. 7

EP 3 242 515 B1

FIG. 8

FIG. 9

FIG. 10

RBmax

Mpsscch

RBmax

Mpssch

RBmax

Mpsscch

Mpssch/2

PSSCH RB

PSSCCH RB

FIG. 13

RBmax

$\lceil Mpsscch / 2 \rceil$

RBmax

RBmin

RBmin

$\lceil Mpsscch / 2 \rceil$

PSSCH RB

PSSCCH RB

FIG. 14

FIG. 15

EP 3 242 515 B1

FIG. 16

FIG. 17

FIG. 18

**EP 3 242 515 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014178671 A